# EUROPEAN PATENT APPLICATION

(11) **EP 3 604 098 A1**
(43) Date of publication of application: **05.02.2020**
(21) Application number: 18774305.9
(22) Date of filing: 20.03.2018
(51) Int. Cl.: B62K 5/10, B60G 21/05

(54) **VEHICLE**

(30) Priority: 31.03.2017 JP 2017072155
(71) Applicant: Equos Research Co., Ltd., Tokyo 101-0021 (JP)
(72) Inventor: ARAKI, Keizo, Tokyo 101-0021 (JP); MIZUNO, Akira, Tokyo 101-0021 (JP); YOKOYAMA, Shoji, Tokyo 101-0021 (JP)
(74) Representative: TBK
(86) International application number: PCT/JP2018/010993
(87) International publication number: WO 2018/180755

(57) **Abstract**

A vehicle includes: N (N is an integer equal to or larger than 3) wheels including a pair of wheels spaced apart from each other in a width direction of the vehicle and a steered wheel turnable to right and left relative to the vehicle body; an operation input unit to be operated to input a steering direction of the steered wheel; a lean mechanism for leaning the vehicle body in its width direction; and a lean control unit for controlling the lean mechanism. The lean control unit controls the lean mechanism so that the vehicle body leans toward the steering direction side in response to an input into the operation input unit. The vehicle includes a detector for detecting a force that changes a lean angle of the vehicle body. The lean control unit causes the lean mechanism to generate a torque that produces a force in a direction opposite to a force detected by the detector.

## Description

### Technical Field

This specification relates to a vehicle which turns by leaning its vehicle body.

### Background Art

Techniques which lean a frame of a vehicle when running on a curve have been proposed. For example, a vehicle has been proposed in which a rear frame having a rear wheel(s) is coupled to a front frame having a front wheel(s), and the rear frame can be tilted relative to the front frame.

### Prior Art Document

### Patent Document

Patent Document 1 Japanese Unexamined Patent Application Publication No. 2003-533403

### Summary of the Invention

### Problems to be Solved by the Invention

A vehicle body during turning can be subject to a centrifugal force toward the side opposite to a center of turn and a force toward the center of turn due to a lean of a vehicle body as well as a variety of other forces. For example, a wheel that leans relative to the ground can be subject to a force called camber thrust. The wheel can also be subject to a force which causes the orientation of the wheel to be turned, due to the lean of the vehicle body if the wheel has a nonzero trail. Such forces are transmitted to the vehicle body which is coupled to the wheel. Thus, driving stability of such a vehicle may decrease because a variety of forces act on its vehicle body.

This specification discloses a technique which can suppress deterioration in driving stability.

### Means for Solving the Problems

For example, this specification discloses the following application examples.

### [Application Example 1]

A vehicle comprising:
a vehicle body;
N (N is an integer equal to or larger than 3) wheels including a pair of wheels spaced apart from each other in a width direction of the vehicle and a steered wheel turnable to right and left relative to the vehicle body;
an operation input unit to be operated to input a steering direction of the steered wheel;
a lean mechanism for leaning the vehicle body in the width direction; and
a lean control unit for controlling the lean mechanism,
wherein the lean control unit controls the lean mechanism so that the vehicle body leans toward the steering direction side in response to an input into the operation input unit, and
the vehicle includes a detector for detecting a force that changes a lean angle of the vehicle body, and
the lean control unit causes the lean mechanism to generate a torque that produces a force in a direction opposite to a force detected by the detector.

According to this configuration, the lean control unit causes the lean mechanism to generate a torque that produces a force in a direction opposite to a force detected by the detector for detecting a force that changes a lean angle of the vehicle body, which can improve the driving stability.

### [Application Example 2]

The vehicle according to Application Example 1,
wherein the lean control unit causes the lean mechanism to continually generate a torque larger than zero that produces the force in the opposite direction when the vehicle turns at a velocity within a particular first range and at a constant turning radius.

When the vehicle turns at a velocity within the particular first range and at a constant turning radius, a variety of forces can act on the vehicle body. According to the above configuration, the lean control unit causes the lean mechanism to continually generate a torque larger than zero, which can improve the driving stability.

### [Application Example 3]

The vehicle according to Application Example 1 or 2,
wherein the lean control unit causes the lean mechanism to continually generate a torque larger than zero that produces the force in the opposite direction when the vehicle turns at a velocity within a particular second range with the lean angle of the vehicle body constant.

When the vehicle turns at a velocity within the particular second range and at a constant lean angle, a variety of forces can act on the vehicle body. According to the above configuration, the lean control unit causes the lean mechanism to continually generate a torque larger than zero, which can improve the driving stability.

### [Application Example 4]

The vehicle according to any one of Application Examples 1 to 3,
wherein the lean control unit causes the lean mechanism to generate a torque so that the force to be detected by the detector does not exceed a predetermined maximum allowable force.

According to this configuration, the lean mechanism generates a torque so that the force to be detected by the detector does not exceed a maximum allowable force, which can improve the driving stability.

### [Application Example 5]

The vehicle according to Application Example 4,
wherein the maximum allowable toque is predetermined so that if the force detected by the detector is the same as the maximum allowable force, a projected position on a horizontal ground when a gravity center of the vehicle body is projected toward a vertically downward direction onto the ground is located within a convex hull area on the ground which is comprised of N contact areas of the N wheels.

According to this configuration, the lean mechanism generates a torque so that the force to be detected by the detector does not exceed a maximum allowable force, thereby improving the driving stability of the vehicle.

### [Application Example 6]

The vehicle according to any one of Application Examples 1 to 5,
wherein the lean control unit uses a plurality of parameters, including the lean angle of the vehicle body and a vehicle velocity, to feedforward-control a torque to be generated by the lean mechanism, and uses a force detected by the detector to feedback-control a torque to be generated by the lean mechanism.

According to this configuration, the toque to be generated by the lean mechanism is feedforward-controlled, which can improve the driving stability.

### [Application Example 7]

The vehicle according to any one of Application Examples 1 to 6, including:
a supporting member including a portion extending along a support axis that is a particular axis, and supporting a particular wheel of the N wheels,
wherein the particular wheel and the supporting member are configured so that an intersection point between the support axis and a ground is located in front of a center location of a contact area between the particular wheel and the ground, and
the detector detects a torque acting on the extending portion of the supporting member as the force that changes the lean angle of the vehicle body.

According to this configuration, because the trail of the particular wheel is not equal to zero, a force acting on the wheel causes a torque to act on the supporting member. This torque can change the lean angle of the vehicle body. The detector can appropriately detect the force which changes the lean angle of the vehicle body by detecting the torque acting on the supporting member.

It should be noted that the techniques disclosed in this specification can be realized in a variety of aspects, for example, a vehicle, a vehicle controller, a vehicle control method, etc.

### Brief Description of the Drawings

Fig. 1 is an explanatory diagram showing a vehicle 10;
Fig. 2 is an explanatory diagram showing the vehicle 10;
Fig. 3 is an explanatory diagram showing the vehicle 10;
Fig. 4 is an explanatory diagram showing the vehicle 10;
Fig. 5 is schematic diagrams showing states of the vehicle 10;
Fig. 6 is an explanatory diagram showing a balance of forces during turning;
Fig. 7 is an explanatory diagram showing a simplified relationship between the steering angle AF and the turning radius R;
Fig. 8 shows graphs illustrating an example of a relationship between the velocity V and the torque tq;
Fig. 9 shows graphs illustrating an example of a relationship between the velocity V and the torque tq;
Fig. 10 shows explanatory diagrams of a first torque tq1;
Fig. 11 shows an explanatory diagram of a second torque tq2;
Fig. 12 shows explanatory diagrams of a third torque tq3;
Fig. 13 shows explanatory diagrams of a fourth torque tq4;
Fig. 14 is a block diagram showing a configuration relating to control of the vehicle 10;
Fig. 15 is a flowchart showing an example control process;
Fig. 16 is a block diagram showing the configuration of the lean motor control unit 102; and
Fig. 17 shows positions of the wheels 12F, 12L, 12R and a position of the gravity center 90c of the vehicle body 90.

### Detailed Description of the Invention

### A. First Embodiment:

### A1. Configuration of Vehicle 10:

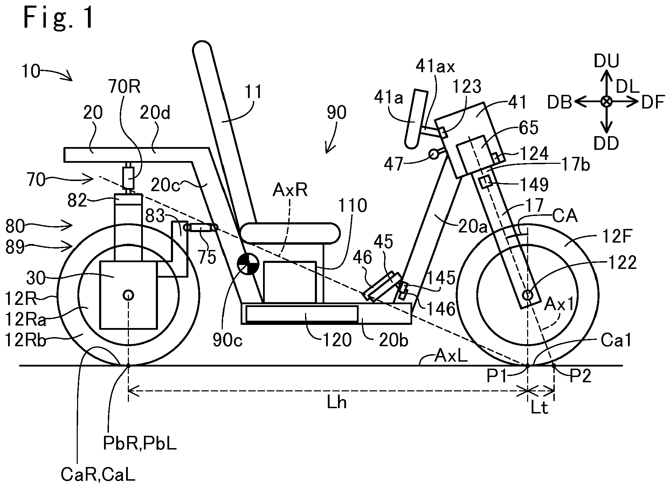

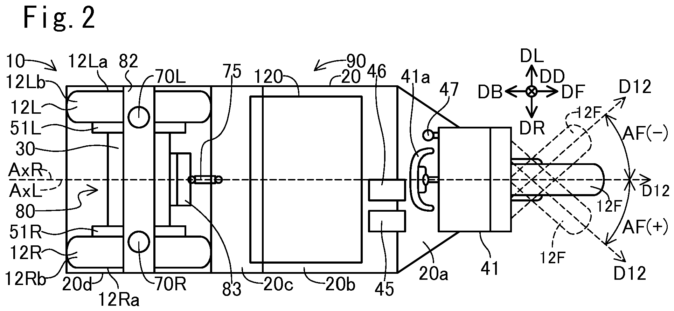

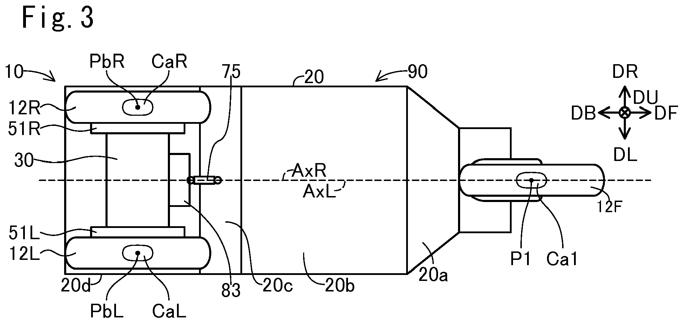

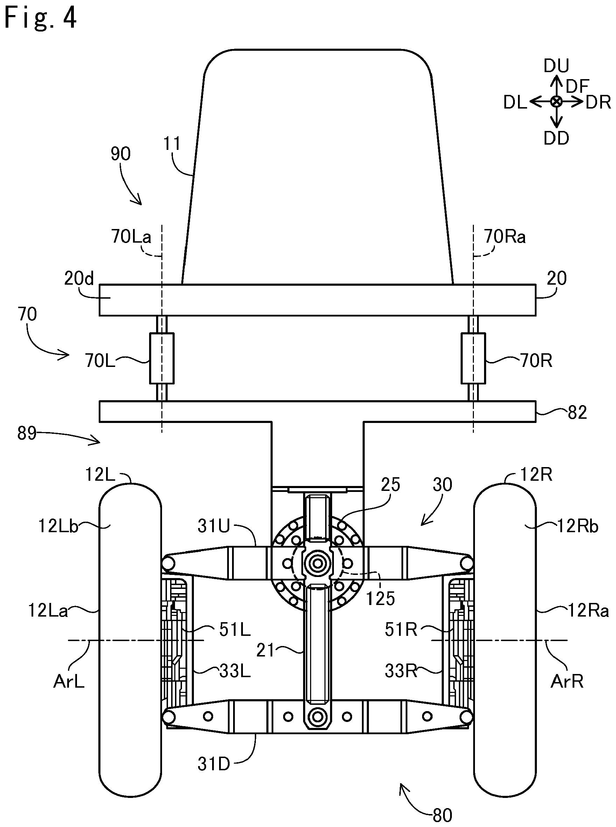

Figs. 1-4 show explanatory diagrams which illustrate a vehicle 10 as one embodiment. Fig. 1 shows a right side view of the vehicle 10, Fig. 2 shows a top view of the vehicle 10, Fig. 3 shows a bottom view of the vehicle 10, and Fig. 4 shows a rear view of the vehicle 10. In Figs. 2-4, only the components for use in illustration are shown that are included in the vehicle 10 configuration shown in Fig. 1, and the remaining components are omitted. In Figs. 1-4, six directions DF, DB, DU, DD, DR, and DL are shown. The front direction DF is a direction of forward movement of the vehicle 10, and the back direction DB is opposite to the front direction DF. The upward direction DU is a vertically upward direction, and the downward direction DD is opposite to the upward direction DU. The right direction DR is a right direction viewed from the vehicle 10 traveling in the front direction DF, and the left direction DL is opposite to the right direction DR. All the directions DF, DB, DR, and DL are horizontal directions. The right and left directions DR and DL are perpendicular to the front direction DF.

In this embodiment, this vehicle 10 is a small single-seater vehicle. The vehicle 10 (Figs. 1 and 2) is a tricycle which includes a vehicle body 90, a single front wheel 12F coupled to the vehicle body 90, and two rear wheels 12L, 12R coupled to the vehicle body 90 and spaced apart in the width direction of the vehicle 10 (i.e. a direction parallel to the right direction DR). The front wheel 12F is steerable, and is located at the center of the vehicle 10 in its width direction. The rear wheels 12L, 12R are unsteerable drive wheels, and are located symmetrically with regard to the center of the vehicle 10 in its width direction.

The vehicle body 90 (Fig. 1) has a main body 20. The main body 20 has a front portion 20a, a bottom portion 20b, a rear portion 20c, and a support portion 20d. The bottom portion 20b is a plate which extends in the horizontal directions (i.e. directions perpendicular to the upward direction DU). The front portion 20a is a plate-like portion which extends obliquely from the end of the bottom portion 20b in the front direction DF side toward the front direction DF side and upward direction DU side. The rear portion 20c is a plate-like portion which extends obliquely from the end of the bottom portion 20b in the back direction DB side toward the back direction DB side and upward direction DU side. The support portion 20d is a plate-like portion which extends from the top of the rear portion 20c toward the back direction DB. For example, the main body 20 has a metal frame, and panels attached to the frame.

The vehicle body 90 (Fig. 1) further includes a seat 11 attached onto the bottom portion 20b, an accelerator pedal 45 and a brake pedal 46 located on the front direction DF side of the seat 11 on the bottom portion 20b, a controller 110 located below the seat surface of the seat 20 and attached onto the bottom portion 20b, a battery 120 attached to the bottom portion 20b below the controller 110, a steering device 41 attached to the end in the front direction DF side of the front portion 20a, and a shift switch 47 attached to the steering device 41. It should be noted that other members (e.g. roof, headlight, etc.) may be attached to the main body 20 although they are not shown in the figures. The vehicle body 90 includes the members attached to the main body 20.

The accelerator pedal 45 is a pedal for accelerating the vehicle 10. An amount of pressing the accelerator pedal 45 (sometimes referred to as "accelerator operation amount") represents an acceleration force desired by the user. The brake pedal 46 is a pedal for decelerating the vehicle 10. An amount of pressing the brake pedal 46 (sometimes referred to as "brake operation amount") represents a deceleration force desired by the user. The shift switch 47 is a switch for selecting a driving mode of the vehicle 10. In this embodiment, it is possible to select a mode from among four driving modes, "drive," "neutral," "reverse," and "parking." The "drive" mode is a mode for moving forward by driving the drive wheels 12L, 12R, the "neutral" mode is a mode in which the drive wheels 12L, 12R can rotate freely, the "reverse" mode is a mode for moving backward by driving the drive wheels 12L, 12R, the "parking" mode is a mode in which at least one wheel (e.g. rear wheels 12L. 12R) cannot rotate.

The steering device 41 (Fig. 1) is a device that supports the front wheel 12F so that it can be turned about a turning axis Ax1 to the turning direction of the vehicle 10. The steering device 41 includes a front fork 17 rotatably supporting the front wheel 12F, a steering wheel 41a as an operation input unit to which the user inputs his/her desired turning direction and operation amount, a bearing 65 for turning the front fork 17 (i.e. front wheel 12F) about the turning axis Ax1.

For example, the front fork 17 (Fig. 1) is a telescopic fork with a built-in suspension (coil spring and shock absorber).

The steering wheel 41a (Fig. 1) can rotate about a supporting rod 41ax which extends along the rotational axis of the steering wheel 41a. The rotational direction (right or left) of the steering wheel 41a represents a turning direction desired by the user. The supporting rod 41ax is couple to the front fork 17. In response to a turn of steering wheel 41a, the front fork 17 (and thus the front wheel) turns in the same direction. The user can input a turning direction (i.e. steering direction of the front wheel 12F) by handling the steering wheel 41a. The operation amount of the steering wheel 41a with respect to a predetermined orientation corresponding to the straight movement (i.e. rotational angle; hereinafter referred to as "steering wheel angle") represents the magnitude of steering angle AF (Fig. 2). The steering angle AF is an angle with respect to the front direction DF of a moving direction D12 in which the front wheel 12F rolls when the vehicle 10 is viewed in the downward direction DD. This moving direction D12 is perpendicular to the rotational axis of the front wheel 12F. In this embodiment, "AF=0" indicates that "direction D12=front direction DF," "AF>0" indicates that the turning direction is the right direction DR (that is, the direction D12 is deflected toward the right direction DR side), and "AF<0" indicates that the turning direction is the left direction DL (that is, the direction D12 is deflected toward the left direction DL side).

As shown in Fig. 1, in this embodiment, when the vehicle 10 is placed on a horizontal ground GL, the turning axis Ax1 of the steering device 41 is tilted obliquely relative to the ground GL, and specifically a direction which is parallel to the turning axis Ax1 and faces the downward direction DD side extends obliquely forward. Therefore, the intersection point P2 between the turning axis Ax1 of the steering device 41 and the ground GL is located on the front direction DF side of the contact center P1 of the front wheel 12F with the ground GL. As shown in Figs. 1 and 3, the contact center P1 represents a center of contact area Ca1 between the front wheel 12F and the ground GL. The center of contact area represents a position of gravity center of the contact area. The gravity center of the area is a position of gravity center on the assumption that its mass is distributed evenly across the area. The distance Lt in the back direction DB between these points P1, P2 is referred to as a trail. A positive trail Lt indicates that the contact center P1 is located on the back direction DB side of the intersection point P2. An angle CA between the vertically upward direction DU and a direction along the turning axis Ax1 toward the vertically upward direction DU side is also referred to as caster angle. The caster angle CA of larger than zero indicates that the direction along the turning axis Ax1 toward the vertically upward direction DU side is tilted diagonally backward.

The two rear wheels 12L, 12R (Fig. 4) are rotatably supported by a rear wheel support 80. The rear wheel support 80 includes a link mechanism 30, a lean motor 25 mounted on the top of the link mechanism 30, a first support portion 82 attached onto the top of the link mechanism 30, and a second support portion 83 attached to the front of the link mechanism 30 (Fig. 1). In Fig. 1, for purposes of illustration, portions of the link mechanism 30, first support portion 82, and second support portion 83 which are hidden by the right rear wheel 12R are also depicted in solid lines. In Fig. 2, for purposes of illustration, the rear wheel support 80, rear wheels 12L, 12R, and connector 75 which are hidden by the main body 20 are depicted in solid lines. In Figs. 1-3, the link mechanism 30 is depicted simply.

The first support portion 82 (Fig. 4) is located on the upward direction DU side of the link mechanism 30. The first support portion 82 includes a plate-like section which extends parallel to the right direction DR from a location in the upward direction DU side of the left rear wheel 12L to a location in the upward direction DU side of the right rear wheel 12R. The second support portion 83 (Fig. 1, Fig. 2) is located on the front direction DF side of the link mechanism 30 between the left rear wheel 12L and the right rear wheel 12R.

The right rear wheel 12R (Fig. 1) includes a wheel 12Ra with a rim, and a tire 12Rb mounted on the rim of the wheel 12Ra. The wheel 12Ra (Fig. 4) is connected to a right electric motor 51R. The right electric motor 51R has a stator and a rotor (not shown). One of the rotor or stator is attached to the wheel 12Ra, and the other is attached to the rear wheel support 80. The rotational axis of the right electric motor 51R is the same as that of the wheel 12Ra, and is parallel to the right direction DR. The configuration of the left rear wheel 12L is similar to that of the right rear wheel 12R. Specifically, the left rear wheel 12L has a wheel 12La and a tire 12Lb. The wheel 12La is connected to a left electric motor 51L. One of the rotor or stator of the left electric motor 51L is attached to the wheel 12La, and the other is attached to the rear wheel support 80. These electric motors 51L, 51R are in-wheel motors which directly drive the rear wheels 12L, 12R.

Figs. 1 and 4 show a state where the vehicle body 90 does not lean but stands upright (that is, a state where a lean angle T described later is equal to zero). In this state, a rotational axis ArL of the left rear wheel 12L and a rotational axis ArR of the right rear wheel 12R are aligned on a same line. Figs. 1 and 3 also show a contact center PbR between the right rear wheel 12R and the ground GL, and a contact center PbL between the left rear wheel 12L and the ground GL. As shown in Fig. 3, the right contact center PbR represents a center of contact area CaR between the right rear wheel 12R and the ground GL. The left contact center PbL represents a center of contact area CaL between the left rear wheel 12L and the ground GL. In the state of Fig. 1, these contact centers PbR, PbL are located at approximately the same position in the front direction DF.

The link mechanism 30 (Fig. 4) is a so-called parallel linkage. The link mechanism 30 includes three longitudinal link members 33L, 21, 33R arranged in order toward the right direction DR, and two lateral link members 31U, 31D arranged in order toward the downward direction DD. The longitudinal link members 33L, 21, 33R are parallel to the vertical direction when the vehicle 10 is stopped. The lateral link members 31U, 31D are parallel to the horizontal direction when the vehicle 10 is stopped. The two longitudinal link members 33L, 33R, and the two lateral link members 31U, 31D form a parallelogram link mechanism. The upper lateral link member 31U couples the upper ends of the longitudinal link members 33L, 33R. The lower lateral link member 31D couples the lower ends of the longitudinal link members 33L, 33R. The center longitudinal link member 21 couples the centers of the lateral link members 31U, 31D. These link members 33L, 33R, 31U, 31D, 21 are mutually coupled rotatably, and their rotational axes are parallel to the front direction DF. The left electric motor 51L is attached to the left longitudinal link member 33L. The right electric motor 51R is attached to the right longitudinal link member 33R. On the top of the center longitudinal link member 21, the first support portion 82 and second support portion 83 (Fig. 1) are secured. The link members 33L, 21, 33R, 31U, 31D, and the support portions 82, 83 are, for example, made from metal.

For example, the lean motor 25 is an electric motor having a stator and a rotor. One of the stator or rotor of the lean motor 25 is secured to the center longitudinal link member 21, and the other is secured to the upper lateral link member 31U. The rotational axis of the lean motor 25 is the same as that of the coupling portion of these link members 31U, 21, and is located at the center of the vehicle 10 in its width direction. When the rotor of the lean motor 25 rotates relative to the stator, the upper lateral link member 31U is tilted with respect to the center longitudinal link member 21. This causes the vehicle 10 to lean. A torque generated by the lean motor 25 (a torque which causes the upper lateral link member 31U to be tilted relative to the center longitudinal link member 21 in this embodiment) may be hereinafter referred to as lean torque.

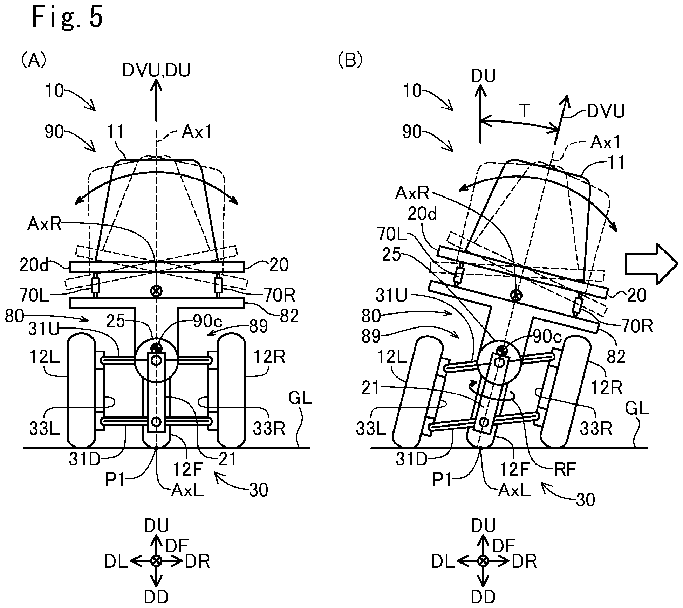

Fig. 5 shows a schematic diagram of the states of the vehicle 10. This figure shows simplified rear views of the vehicle 10. Fig. 5(A) shows the state in which the vehicle 10 stands upright while Fig. 5(B) shows the state in which the vehicle 10 leans. As shown in Fig. 5(A), when the upper lateral link member 31U is perpendicular to the center longitudinal link member 21, all of the wheels 12F, 12L, 12R stand upright relative to the flat ground GL. Also, the whole vehicle 10 including the vehicle body 90 stands upright relative to the ground GL. A vehicle upward direction DVU in the figure represents the upward direction of the vehicle 10. With the vehicle 10 not leaning, the vehicle upward direction DVU is the same as the upward direction DU. It should be noted that the vehicle body 90 is rotatable relative to the rear wheel support 80 as described later. In this embodiment, therefore, the orientation of the rear wheel support 80 (specifically, the orientation of the center longitudinal link member 21 which is the basis of movement of the link mechanism 30) is adopted as the vehicle upward direction DVU.

As shown in Fig. 5(B), when the upper lateral link member 31U is tilted relative to the center longitudinal link member 21, one of the right rear wheel 12R or left rear wheel 12L moves in the vehicle upward direction DVU side while the other moves in an opposite direction side to the vehicle upward direction DVU. That is, the link mechanism 30 and the lean motor 25 change the relative position, in a direction perpendicular to the rotational axis, between the pair of wheels 12L, 12R spaced apart in the width direction. As a result, these wheels 12F, 12L, 12R lean relative to the ground GL while all of the wheels 12F, 12L, 12R have contact with the ground GL. Also, the whole vehicle 10 including the vehicle body 90 leans relative to the ground GL. In the example of Fig. 5(B), the right rear wheel 12R moves in the vehicle upward direction DVU side while the left rear wheel 12L moves in the opposite direction side. As a result, the wheels 12F, 12L, 12R, and thus the whole vehicle 10 including the vehicle body 90 lean to the right direction DR side. As described later, when the vehicle 10 turns to the right direction DR side, the vehicle 10 leans to the right direction DR side. When the vehicle 10 turns to the left direction DL side, the vehicle 10 leans to the left direction DL side.

In Fig. 5(B), the vehicle upward direction DVU is tilted in the right direction DR side relative to the upward direction DU. Hereinafter, when the vehicle 10 is viewed in the front direction DF, the angle between the upward direction DU and the vehicle upward direction DVU is referred to as lean angle T. Where "T>0" indicates a lean to the right direction DR side while "T<0" indicates a lean to the left direction DL side. When the vehicle 10 leans, the vehicle body 90 also leans to substantially the same direction. The lean angle T of the vehicle 10 can be considered as the lean angle T of the vehicle body 90.

The lean motor 25 has a lock mechanism (not shown) for unrotatably locking the lean motor 25. By operating the lock mechanism, the upper lateral link member 31U is unrotatably locked relative to the center longitudinal link member 21. As a result, the lean angle T is fixed. For example, the lean angle T is fixed at zero when the vehicle 10 is parked. Preferably, the lock mechanism is a mechanical mechanism which consumes no electric power when locking the lean motor 25 (and thus the link mechanism 30).

A lean axis AxL is shown in Fig. 5(A) and (B). The lean axis AxL is located on the ground GL. The link mechanism 30 and the lean motor 25 can cause the vehicle 10 to lean to right and left about the lean axis AxL. In this embodiment, the lean axis AxL is located on the ground GL, and is a straight line which passes through a contact center P1 between the front wheel 12F and the ground GL, and which is parallel to the front direction DF. The link mechanism 30 for rotatably supporting the rear wheels 12L, 12R, and the lean motor 25 as an actuator for actuating the link mechanism 30 constitute a lean mechanism 89 which leans the vehicle body 90 in the width direction of the vehicle 10. The lean angle T is a lean angle caused by the lean mechanism 89.

The vehicle body 90 (specifically, main body 20) is coupled to the rear wheel support 80 rotatably about a roll axis AxR which extends from the back direction DB side toward the front direction DF side, as shown in Figs. 1, 5(A), and 5(B). In this embodiment, the main body 20 is coupled to the rear wheel support 80 via a suspension system 70 and the connector 75, as shown in Figs 2 and 4. The suspension system 70 has a left suspension 70L and a right suspension 70R. In this embodiment, each of the suspensions 70L, 70R is a telescopic suspension with built-in coil spring and shock absorber. Each suspension 70L, 70R can extend or retract along a central axis 70La, 70Ra (Fig. 4) of each suspension 70L, 70R. When the vehicle 10 stands upright as shown in Fig. 4, the axis of each suspension 70L, 70R is approximately parallel to the vertical direction. The upper ends of the suspensions 70L, 70R are coupled to the support portion 20d of the main body 20 rotatably about a rotational axis parallel to a first axis direction (e.g. the front direction DF). The lower ends of the suspensions 70L, 70R are coupled to the first support portion 82 of the rear wheel support 80 rotatably about a rotational axis parallel to a second axis direction (e.g. the right direction DR). It should be noted that the configuration of the coupling portions between the suspensions 70L, 70R and the other members may be a variety of other configurations (e.g. ball-and-socket joint).

The connector 75 is a rod which extends in the front direction DF as shown in Figs. 1 and 2. The connector 75 is located at the center of the vehicle 10 in its width direction. The end of the connector 75 in the front direction DF side is coupled to the rear portion 20c of the main body 20. The coupling portion is configured as ball-and-socket joint, for example. The connector 75 can move in any direction relative to the rear portion 20c within a predetermined range. The end of the connector 75 in the back direction DB side is coupled to the second support portion 83 of the rear wheel support 80. The coupling portion is configured as ball-and-socket joint, for example. The connector 75 can move in any direction relative to the second support portion 83 within a predetermined range.

In this manner, the main body 20 (and thus the vehicle body 90) is coupled to the rear wheel support 80 via the suspension system 70 and the connector 75. The vehicle body 90 is movable relative to the rear wheel support 80. The roll axis AxR of Fig. 1 represents a central axis about which the vehicle body 90 rotates relative to the rear wheel support 80 in the right direction DR or left direction DL. In this embodiment, the roll axis AxR is a straight line which passes through the contact center P1 between the front wheel 12F and the ground GL, and through the vicinity of the connector 75. The vehicle body 90 can rotate in its width direction about the roll axis AxR through the extension/retraction of the suspensions 70L, 70R. It should be noted that in this embodiment, the lean axis AxL about which leaning occurs through the lean mechanism 89 is different form the roll axis AxR.

In Fig. 5(A) and (B), the vehicle body 90 which rotates about the roll axis AxR is shown in dotted lines. The roll axis AxR in this figure represents a location of the roll axis AxR on a plane which includes the suspensions 70L, 70R, and which is perpendicular to the front direction DF. As shown in Fig. 5(B), the vehicle body 90 can also rotate about the roll axis AxR to the right direction DR and to the left direction DL even when the vehicle 10 leans.

The vehicle body 90 can rotate in the width direction of the vehicle 10 relative to the vertically upward direction DU (and thus the ground GL) through a rotation by the rear wheel support 80 and a rotation by the suspension system 70 and connector 75. The rotation of the vehicle body 90 in its width direction achieved in an integrated manner in the overall vehicle 10 may be referred to as roll. In this embodiment, the roll of the vehicle body 90 is principally caused through all of the rear wheel support 80, the suspension system 70, and the connector 75. A roll is also caused by a deformation of the members of the vehicle 10, such as the vehicle body 90 and the tires 12Rb, 12Lb.

A gravity center 90c is shown in Figs. 1, 5(A), and 5(B). This gravity center 90c is a gravity center of the vehicle body 90 under a full load condition. The full load condition means that the vehicle 10 carries an occupant (and possibly a load) so that the gross weight of the vehicle 10 becomes the acceptable gross weight. For example, no maximum loading weight may be specified, but a maximum riding capacity may be specified. In this case, the gravity center 90c is a gravity center when the vehicle 10 is filled to its maximum riding capacity. A reference body weight (e.g. 55kg) preset corresponding to the maximum riding capacity is adopted as occupant's body weight. Alternatively, a maximum loading weight may be specified in addition to a maximum riding weight. In this case, the gravity center 90c is a gravity center of the vehicle body 90 when the vehicle 10 is filled to its maximum riding capacity and maximum loading capacity.

As shown, the gravity center 90c is located on the downward direction DD side of the roll axis AxR. Therefore, if the vehicle body 90 oscillates about the roll axis AxR, an excessive increase in amplitude of oscillation can be suppressed. In this embodiment, the battery 120, which is a relatively heavy element among the elements of the vehicle body 90 (Fig. 1), is located in a lower position in order to locate the gravity center 90c on the downward direction DD side of the roll axis AxR. Specifically, the battery 120 is secured to the bottom portion 20b, which is the lowest portion among the main body 20 of the vehicle body 90. Therefore, the gravity center 90c can be easily made lower than the roll axis AxR.

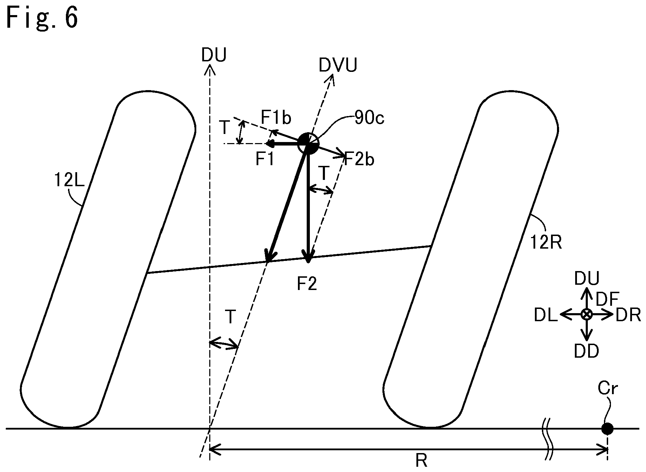

Fig. 6 shows an explanatory diagram illustrating a balance of forces during turning. This figure shows a rear view of the rear wheels 12L, 12R during turning to right. As described later, when the turning direction is the right direction, the controller 110 (Fig. 1) can control the lean motor 25 so that the rear wheels 12L, 12R (and thus the vehicle 10) lean relative to the ground GL to the right direction DR.

A first force F1 in the figure is a centrifugal force acting on the vehicle body 90. A second force F2 is a gravity acting on the vehicle body 90. Where the mass of the vehicle body 90 is m (kg), the acceleration of gravity is g (about 9.8m/s²), the lean angle of the vehicle 10 relative to the vertical direction is T (degree), the velocity of the vehicle 10 during turning is V (m/s), and the turning radius is R (m). The first force F1 and the second force F2 are expressed in Equations 1 and 2, respectively: $F 1 = \left({mV}^{2}\right) / R$ $F 2 = mg$

In addition, a force F1b in the figure is a component of the first force F1 in a direction perpendicular to the vehicle upward direction DVU. A force F2b is a component of the second force F2 in a direction perpendicular to the vehicle upward direction DVU. The force F1b and the force F2b are expressed in Equations 3 and 4, respectively: $F 1 ⁢ b = F 1 cos \left(T\right)$ $F 2 ⁢ b = F 2 sin \left(T\right)$

The force F1b is a component which causes the vehicle upward direction DVU to be rotated to the left direction DL side while the force F2b is a component which causes the vehicle upward direction DVU to be rotated to the right direction DR side. When the vehicle 10 continues to turn stably with the lean angle T (and furthermore the velocity V and turning radius R) maintained, the relationship between F1b and F2b is expressed in the following equation 5: $F 1 ⁢ b = F 2 ⁢ b$ By substituting Equations 1-4 as discussed above into Equation 5, the turning radius R is expressed in Equation 6: $R = {V}^{2} / \left(g tan\left(T\right)\right)$ Equation 6 is established independently of the mass m of the vehicle body 90.

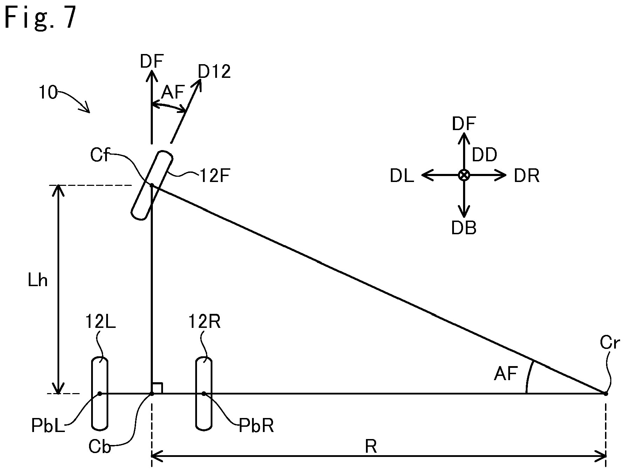

Fig. 7 shows an explanatory diagram illustrating a simplified relationship between the steering angle AF and the turning radius R. This figure shows the wheels 12F, 12L, 12R viewed in the downward direction DD. In the figure, the front wheel 12F turns to the right direction DR, and thus the vehicle 10 turns to the right direction DR. A front center Cf in the figure is the center of the front wheel 12F. The front center Cf is located on the rotational axis of the front wheel 12F. The front center Cf is located at approximately the same position as the contact center P1 (Fig. 1) when the vehicle 10 is viewed in the downward direction DD. A rear center Cb is the center between the two rear wheels 12L, 12R. The rear center Cb is located at the middle between the rear wheels 12L, 12R on the rotational axis of the rear wheels 12L, 12R when the vehicle body 90 does not lean. The rear center Cb has the same location as a midpoint between the contact centers PbL, PbR of the two rear wheels 12L, 12R when the vehicle 10 is viewed in the downward direction DD. A center Cr is the turning center (referred to as turning center Cr). A wheelbase Lh is the distance between the front center Cf and the rear center Cb in the front direction DF. As shown in Fig. 1, the wheelbase Lh is the distance between the rotational axis of the front wheel 12F and that of the rear wheels 12L, 12R in the front direction DF.

As shown in Fig. 7, the front center Cf, rear center Cb, and turning center Cr form a right angled triangle. The internal angle of the vertex Cb is 90 degrees. The internal angle of the vertex Cr is equal to the steering angle AF. Therefore, the relationship between the steering angle AF and the turning radius R is expressed in Equation 7: $AF = arctan \left(Lh/R\right)$

It should be noted that there are a variety of difference between the actual behavior of the vehicle 10 and the simplified behavior in Fig. 7. For example, the actual wheels 12F, 12L, 12R can slip relative to the ground GL. In addition, the actual rear wheels 12L, 12R lean. Therefore, the actual turning radius may be different from the turning radius R in Equation 7. However, Equation 7 can be used as a good approximate equation which represents the relationship between the steering angle Af and the turning radius R.

In addition, the behavioral stability of the vehicle 10 is improved because the forces F1b, F2b (Fig. 6, Equation 5) balance each other when the turning radius is equal to the turning radius R expressed in Equation 6 discussed above. Furthermore, the vehicle 10 turning at the lean angle T will turn in the turning radius R expressed in Equation 6. Then, when the vehicle 10 turns at the lean angle T, the behavioral stability of the vehicle 10 is improved if the orientation of the front wheel 12F (i.e. steering angle AF) is the same as an orientation of the steering angle AF specified based on the turning radius R expressed in Equation 6, and Equation 7.

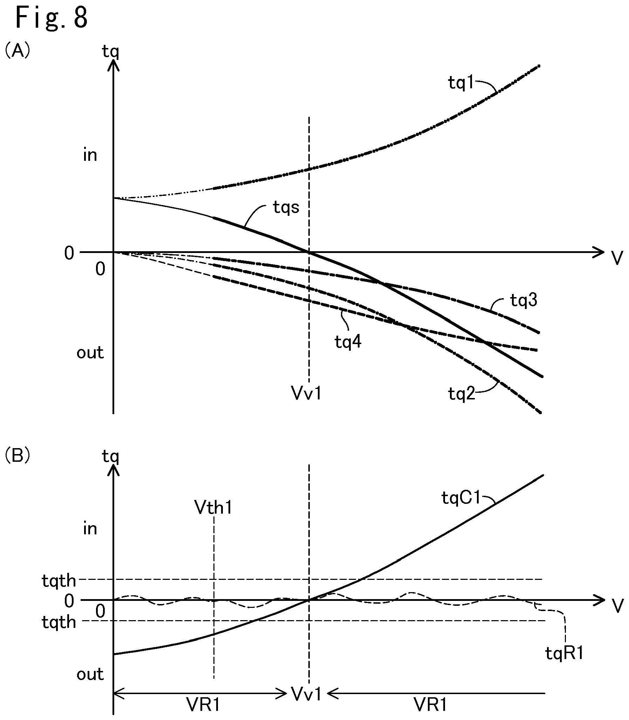

It should be noted that in practice, the front wheel 12F (and thus the steering device 41) of the vehicle 10 moving forward with its vehicle body 90 leaning can be subject to a variety of forces. Fig. 8(A) is a graph showing an example of a relationship between the velocity V and the torque tq. The horizontal axis represents the velocity V of the vehicle 10, and the vertical axis represents the torque tq about the turning axis Ax1 which acts on the front wheel 12F. This graph shows the change in the torque tq when the velocity V is changed with the turning radius R (Figs. 6 and 7) constant. In the graph, the direction of the torque tq is denoted by "in" direction and "out" direction. The torque tq in the in direction turns the direction D12 of the front wheel 12F (Fig. 2) toward the lean direction. The torque tq in the out direction turns the direction D12 of the front wheel 12F toward the opposite direction to the lean direction. For example, when the vehicle body 90 leans to the right direction DR side, the torque tq in the in direction turns the direction D12 of the front wheel 12F toward the right direction DR side, and the torque tq in the out direction turns the direction D12 of the front wheel 12F toward the left direction DL side. The graph shows four torques tq1-tq4 which can act on the front wheel 12F, and a total torque tqs of these torques tq1-tq4.

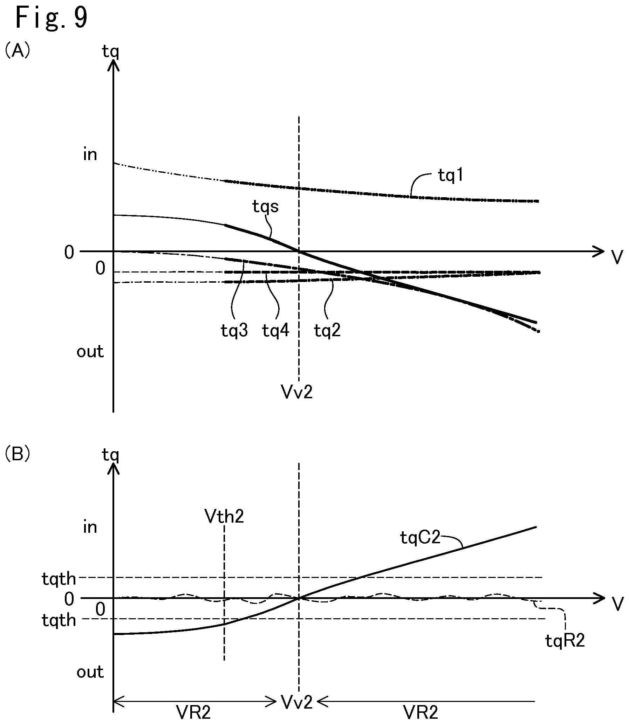

Fig. 9(A) is another graph showing an example of a relationship between the velocity V and the torque tq. This graph shows the change in the torque tq when the velocity V is changed with the lean angle T (Fig. 5) constant. The horizontal axis represents the velocity V, and the vertical axis represents the torque tq. This graph also shows four torques tq1-tq4 and a total torque tqs similarly to the graph of Fig. 8(A).

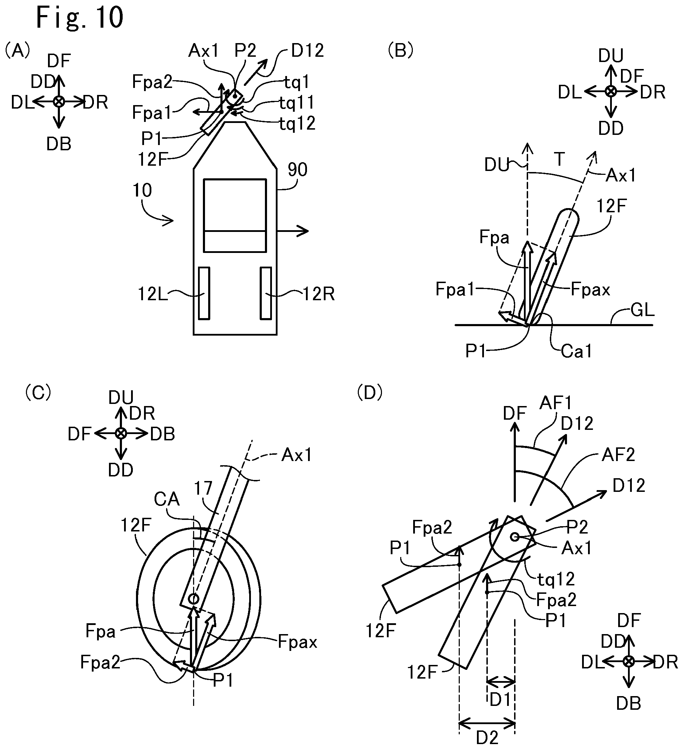

Fig. 10 shows explanatory diagrams of a first torque tq1. Fig. 10(A) schematically shows the vehicle 10 viewed in the downward direction DD, and Fig. 10(B) schematically shows the front wheel 12F viewed in the front direction DF. These diagrams show that the vehicle body 90 of the vehicle 10 moving forward leans to the right direction DR side. As shown in Fig. 10(B), the front wheel 12F leans to the right direction DR side. In this state, the front wheel 12F has contact with the ground GL, and supports a portion of the weight of the vehicle 10. Accordingly, the front wheel 12F is subject to a force Fpa in the upward direction DU from the ground GL. The force Fpa acts on the contact center P1 of the front wheel 12F. This force Fpa includes a component Fpax parallel to the turning axis Ax1 of the front wheel 12F, and a component Fpa1 perpendicular to the turning axis Ax1 and toward the left direction DL side. The perpendicular component Fpa1 causes the contact center P1 of the front wheel 12F to move toward the left direction DL.

As shown in Fig. 10(A), the contact center P1 of the front wheel 12F is subject to the force Fpa1 toward the left direction DL side. The intersection point P2 between the turning axis Ax1 of the front wheel 12F and the ground is located on the front direction DF side of the contact center P1. Accordingly, due to the force Fpa1, the front wheel 12F is subject to a first partial torque tq11 which causes the direction D12 of the front wheel 12F to be turned toward the right direction DR side. The force Fpa1 increases as the absolute value of the lean angle T increases from zero. Therefore, the larger the absolute value of the lean angle T is, the larger the first partial torque tq11 due to the force Fpa1 is.

Fig. 10(C) schematically shows the wheel 12F viewed in the right direction DR. This diagram shows that the moving direction D12 of the front wheel 12F turns to the right direction DR side. As described above, the contact center P1 of the front wheel 12F is subject to the force Fpa in the upward direction DU from the ground GL. As also shown, in this embodiment, the caster angle CA of the front wheel 12F is larger than zero. The force Fpa includes a component Fpax parallel to the turning axis Ax1 of the front wheel 12F, and a component Fpa2 perpendicular to the turning axis Ax1 and toward the front direction DF side. The perpendicular component Fpa2 causes the contact center P1 of the front wheel 12F to move toward the front direction DF.

Fig. 10(D) schematically shows the wheel 12F viewed in the downward direction DD. This diagram shows that the moving direction D12 of the front wheel 12F turns to the right direction DR side. The front wheel 12F with the relatively smaller steering angle AF1 and the front wheel 12F with the relatively larger steering wheel AF2 are shown in the diagram. As described with regard to Fig. 10(C), the contact center P1 of the front wheel 12F is subject to the force Fpa2 toward the front direction DF side. In addition, the contact center P1 is located on the left direction DL side of the intersection point P2 of the turning axis Ax1 when the moving direction D12 of the front wheel 12F turns to the right direction DR side. Accordingly, due to the Fpa2, the front wheel 12F is subject to a second partial torque tq12 which causes the direction D12 of the front wheel 12F to be turned toward the right direction DR side. If the force Fpa2 is constant in magnitude, the second partial torque tq12 is increased with an increase in a distance between the contact center P1 and the intersection point P2 of the turning axis Ax1 (hereinafter referred to as perpendicular distance) in a direction (which is identical to the right direction DR in this case) perpendicular to the direction of the force Fpa2. The distance D1 shown in the diagram is a perpendicular distance when the steering angle AF is the relatively smaller steering angle AF1, and the distance D2 is a perpendicular distance when the steering angle AF is the relatively larger steering angle AF2. The trail Lt (Fig. 1) of the front wheel 12F is larger than zero. Accordingly, as shown in Fig. 10(D), the larger the steering angle AF is, the larger perpendicular distance is. Accordingly, the larger the steering angle AF is, the larger the second partial torque tq12 is.

The first torque tq1 (Figs. 8(A), 9(A), 10(A)) is a sum of these partial torques tq11, tq12. The first torque tq1 changes in response to the lean angle T and the steering angle AF. For example, if the turning radius R is constant as in the graph of Fig. 8(A), the first partial torque tq11 (Figs. 10(A), 10(B)) is increased with an increase in the vehicle velocity V because the absolute value of the lean angle T is increased with an increase in the vehicle velocity V. In addition, the steering angle AF can be constant because the turning radius R is constant. Furthermore, the absolute value of the steering angle AF necessary to maintain the turning radius R can be smaller when the vehicle velocity V is higher. Accordingly, the second partial torque tq12 (Fig. 10(D)) can remain constant or become smaller with an increase in the vehicle velocity V. The decrease in the second partial torque tq12 is smaller than the increase in the first partial torque tq11. Accordingly, in the graph of Fig. 8(A), the first torque tq1 is increased with an increase in the vehicle velocity V.

If the lean angle T is constant as in the graph of Fig. 9(A), the first partial torque tq11 (Figs. 10(A), 10(B)) is approximately constant regardless of the vehicle velocity V. In addition, the absolute value of the steering angle AF is decreased with an increase in the vehicle velocity V because the turning radius R is increased with an increase in the vehicle velocity V when the lean angle T is constant. Accordingly, the second partial torque tq12 (Fig. 10(D) is decreased with an increase in the vehicle velocity V. Thus, in the graph of Fig. 9(A), the first torque tq1 is decreased with an increase in the vehicle velocity V.

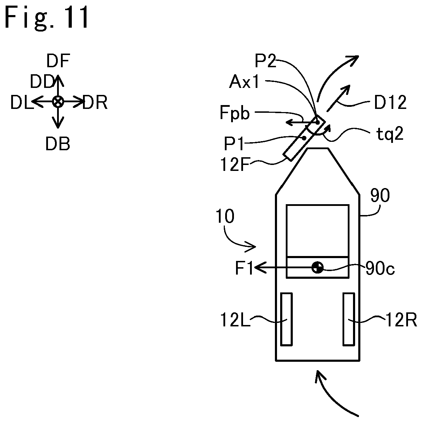

Fig. 11 shows an explanatory diagram of a second torque tq2. The diagram schematically shows the vehicle 10 viewed in the downward direction DD. In the diagram, the vehicle body 90 of the vehicle 10 is leaning to the right direction DR side, and the vehicle 10 is turning to the right direction DR side. As also described with regard to Fig. 6, the vehicle body 90 of the turning vehicle 10 is subject to the centrifugal force F1 toward the side opposite to the center of turn (in this case, left direction DL side). That is, the turning axis Ax1 of the front wheel 12F is subject to a force Fpb toward the left direction DL side. On the other hand, the contact center P1 between the front wheel 12F and the ground cannot readily move to the left direction DL side due to friction. And, the contact center P1 is located on the back direction DB side of the intersection point P2 between the turning axis Ax1 and the ground. As a result, the front wheel 12F can be subject to the second torque tq2 which causes the direction D12 of the front wheel 12F to be turned toward the left direction DL side. Such a second torque tq2 is increased with an increase in the centrifugal force F1.

If the turning radius R is constant as in the graph of Fig. 8(A), the centrifugal force is increased with an increase in the vehicle velocity V. Accordingly, the second torque tq2 is increased with an increase in the vehicle velocity V. The case in which the lean angle T is constant as in the graph of Fig. 9(A) is described as follows. If the lean of the vehicle body 90 matches with the centrifugal force as in Fig. 6, "F1=F2 tan(T)." In this manner, the centrifugal force F1 is approximately constant if the lean angle T is constant. Therefore, in the graph of Fig. 9(A), the second torque tq2 is approximately constant regardless of the vehicle velocity V.

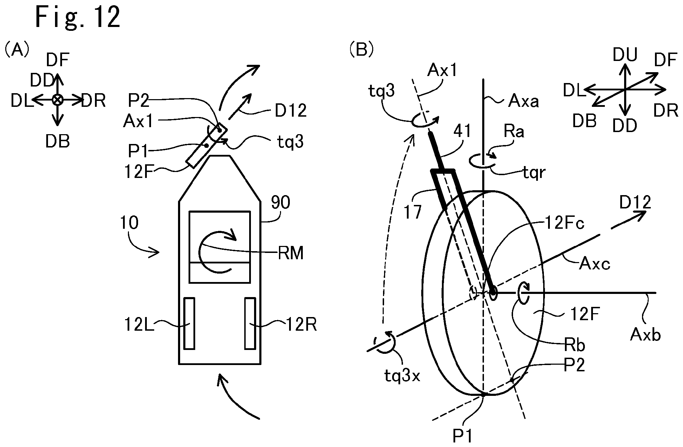

Fig. 12 shows explanatory diagrams of a third torque tq3. Fig. 12(A) schematically shows the vehicle 10 viewed in the downward direction DD, and Fig. 12(B) shows a schematic perspective view of the front wheel 12F and the steering device 41 (which is a portion of the front fork 17 in this example). These diagrams show that the vehicle body 90 of the vehicle 10 moving forward is leaning to the right direction DR side, and the vehicle 10 is turning to the right direction DR side.

Fig. 12(B) shows three axes Axa, Axb, Axc. The rotational axis Axb is a rotational axis of the front wheel 12F. When the vehicle 10 moves forward, the front wheel 12F rotates about this rotational axis Axb. A rotational direction Rb associated with the rotational axis Axb in the diagram indicates a rotational direction of the front wheel 12F about the rotational axis Axb. The vertical axis Axa is an axis that passes through a center 12Fc of the front wheel 12F and that is parallel to the vertically upward direction DU. The center 12Fc of the front wheel 12F is located on the rotational axis Axb. The turning axis Ax1 of the steering device 41 is tilted obliquely relative to the vertical axis Axa. The longitudinal axis Axc is an axis that passes through the center 12Fc of the front wheel 12F and that is perpendicular to the vertical axis Axa and to the rotational axis Axb. This longitudinal axis Axc is approximately parallel to the ground, and is also parallel to the moving direction D12 of the front wheel 12F.

When viewed in the downward direction DD as in Fig. 12(A), the vehicle 10 turning toward the right direction DR side is making a clockwise revolution movement about the turning center Cr (Fig. 7) while making a rotation movement RM (Fig. 12(A)) which causes the front direction DF of the vehicle 10 to be rotated clockwise. Due to this rotation movement RM of the vehicle 10, the front wheel 12F also makes a rotation movement which the moving direction D12 of the front wheel 12F to be rotated clockwise. A rotational direction Ra associated with the vertical axis Axa in Fig. 12(B) indicates a direction of the rotation movement of the front wheel 12F.

In this manner, the front wheel 12F is subject to a torque tqr in the rotational direction Ra about vertical axis Axa. This torque tqr causes the rotational axis Axb of the front wheel 12F to be rotated. In this case, similarly to the operation of a gyroscope, the front wheel 12F rotating about the rotational axis Axb is subject to a torque tq3x about the longitudinal axis Axc which is perpendicular to the rotational axis Axb and to the vertical axis Axa, an axis of the torque tqr. This torque tq3x causes the lean of the front wheel 12F to be changed to the left direction DL side.

In this embodiment, the turning axis Ax1 of the steering device 41 is not perpendicular to but tilted relative to the longitudinal axis Axc because the caster angle CA (Fig. 1) is larger than zero. Accordingly, the torque tq3x about the longitudinal axis Axc includes a torque component about the turning axis Ax1 of the steering device 41. This torque component about the turning axis Ax1 is the third torque tq3. This third torque tq3 is a torque in such a direction as to cause the direction D12 of the front wheel 12F to be turned toward the left direction DL. This third torque tq3 is increased with an increase in an angular momentum (i.e. velocity V) due to the rotation of the front wheel 12F about the rotational axis Axb. It is also increased with an increase in an angular velocity of the rotation movement.

If the turning radius R is constant as in the graph of Fig. 8(A), the angular velocity of the rotation movement is increased with an increase in the vehicle velocity V. Accordingly, the third torque tq3 is increased with an increase in the vehicle velocity V. If the lean angle T is constant as in the graph of Fig. 9(A), the angular velocity of the rotation movement can be decreased because the turning radius R is increased with an increase in the vehicle velocity V. However, the angular momentum due to the rotation of the front wheel 12F about the rotational axis Axb is increased with an increase in the vehicle velocity V. Accordingly, the third torque tq3 is increased with an increase in the vehicle velocity V.

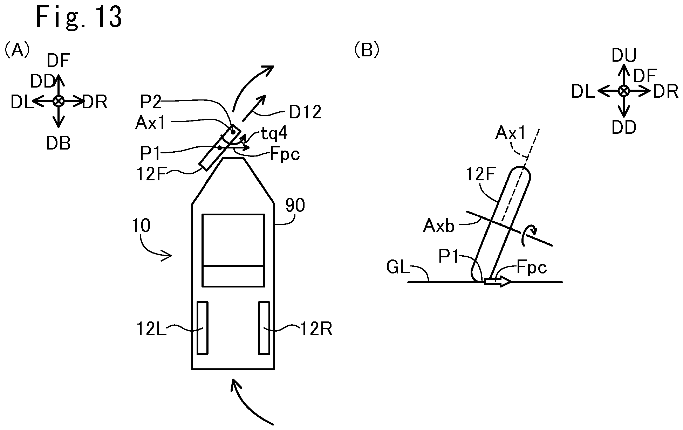

Fig. 13 shows explanatory diagrams of a fourth torque tq4. Fig. 13(A) schematically shows the vehicle 10 viewed in the downward direction DD, and Fig. 13(B) schematically shows the front wheel 12F viewed in the front direction DF. These diagrams show that the vehicle body 90 of the vehicle 10 moving forward leans to the right direction DR side. As shown in Fig. 13(B), in response to the vehicle body 90 leaning, the front wheel 12F also leans to the right direction DR side. As publicly known, a wheel that rotates while leaning relative to the ground GL is subject to a force called camber thrust. The camber thrust is a force in the lean direction of the wheel that acts on a portion of the wheel in contact with the ground. If the wheel 12F leans to the right direction DR side as shown in Fig. 13(B), the contact center P1 of the front wheel 12F is subject to the camber thrust Fpc in the right direction DR.

As shown in Fig. 13(A), the contact center P1 of the front wheel 12F is subject to the camber thrust Fpc in the right direction DR. The intersection point P2 between the turning axis Ax1 of the front wheel 12F and the ground is located on the front direction DF side of the contact center P1. Accordingly, due to the camber thrust Fpc, the front wheel 12F can be subject to the fourth torque tq4 which causes the direction D12 of the front wheel 12F to be turned toward the left direction DL side. The fourth torque tq4 is increased with an increase in the camber thrust Fpc. And, the camber thrust Fpc is increased with an increase in the lean of the front wheel 12F, that is, an increase in the absolute value of the lean angle T.

If the turning radius R is constant as in the graph of Fig. 8(A), the fourth torque tq4 is increased with an increase in the vehicle velocity V because the absolute value of the lean angle T is increased with the increase in the vehicle velocity V. In addition, if the lean angle T is constant as in the graph of Fig. 9(A), the fourth torque tq4 is approximately constant regardless of the vehicle velocity V.

The above description refers to the case where the vehicle 10 turns to the right direction DR. If the vehicle 10 turns to the left direction DL, torques in respective opposite directions to the torques tq1-tq4 shown in Figs. 10-13 can act on the front wheel 12F.

The total torque tqs shown in Figs. 8(A), 9(A) is a sum of the torques tq1-tq4. As shown, the total torque tqs changes from the in direction to the out direction with an increase in the velocity V. The velocities Vv1, Vv2 are velocities at which the total torque tqs is equal to zero (sometimes referred to as zero velocities Vv1, Vv2). When the velocity V is in the range of lower than the zero velocity Vv1, Vv2, the total torque tqs is a torque of larger than zero in the in direction, and is decreased with an increase in the velocity V. When the velocity V is in the range of higher than the zero velocity Vv1, Vv2, the total torque tqs is a torque of larger than zero in the out direction, and is increased with an increase in the velocity V. It should be noted that the relationship between the torques tq1-tq4 and the velocity V can vary according to the configuration of the vehicle 10. Therefore, the relationship between the total torque tqs and the velocity V can also vary according to the configuration of the vehicle 10. The zero velocities Vv1, Vv2 at which the total torque tqs is equal to zero can also vary according to the configuration of the vehicle 10. In addition, the torques tq1-tq4 that act on the front wheel 12F vary according to the driving condition of the vehicle 10.

In any event, the first torque tq1 in the in direction (Fig. 10) acts on the front wheel 12F in a variety of driving conditions. And, the torques tq2, tq3, tq4 in the out direction (Figs. 11-13) act on the front wheel 12F in a variety of driving conditions. The torques tq2, tq3, tq4 in the out direction can change significantly according to the driving condition, such as the vehicle velocity V. In general, one or more of the torques tq2, tq3, tq4 in the out direction can be increased with an increase in the vehicle velocity V. As a result, not just in the case of the turning radius R being constant and the case of the lean angle T being constant but in a variety of driving conditions, the total torque tqs changes from the in direction to the out direction according to the vehicle velocity V. Therefore, the total torque tqs is equal to zero when the vehicle velocity V is at a particular velocity (e.g. the zero velocities Vv1, Vv2 in Figs. 8(A), 9(A)), but is larger than zero in the velocity range other than the particular velocities.

The total torque tqs larger than zero as described above can cause the moving direction of the front wheel 12F to change. For example, if the vehicle velocity V is lower, the total torque tqs in the in direction can cause the direction D12 of the front wheel 12F to further turn toward the lean direction. As a result, the steering angle AF of the front wheel 12F can deviate from the steering angle AF expressed in Equation 7.

In addition, if the total torque tqs causes the steering angle AF to change, the lean angle T can change according to the change in the steering angle AF. For example, if the vehicle velocity V is lower, the total torque tqs in the in direction can cause the absolute value of the steering angle AF to increase. This results in the decreased turning radius and thus the increased centrifugal force. Due to the increased centrifugal force, the vehicle body 90 can rise toward the opposite side to the turning direction, that is, the absolute value of the lean angle T can become smaller. In addition, in this embodiment, the total torque tqs about the turning axis Ax1 includes a torque component that causes the lean angle T of the vehicle body 90 to change because the caster angle CA (Fig. 1) is larger than zero. Thus, the total torque tqs may be considered as a force that causes the lean angle T of the vehicle body 90 to change.

In this manner, the driving stability of the vehicle 10 can be deteriorated because the steering angle AF and the lean angle T can change due to the total torque tqs acting on the front wheel 12F. It should be noted that the front wheel 12F is supported by the steering device 41. Therefore, the total torque tqs may be also considered as a torque that acts on the steering device 41 (e.g. front fork 17).

It should be noted that the first partial torque tq11 in Figs. 10(A), 10(B), the second torque tq2 in Fig. 11, and the fourth torque tq4 in Fig. 13 can cause the steering angle AF of the front wheel 12F (and thus the lean angle T of the vehicle body 90) to change, regardless of the magnitude of the caster angle CA. In addition, the third torque tq3 in Fig. 12(B) can cause the steering angle AF of the front wheel 12F (and thus the lean angle T of the vehicle body 90) to change, regardless of the magnitude of the trail Lt. In this manner, the front wheel 12F (and thus the steering device 41) can be subject to a variety of forces. Therefore, it is not easy to adjust the caster angle CA and the trail Lt and thereby reduce the force causing a change in the steering angle AF (and thus the the lean angle T of the vehicle body 90).

It should be noted that if the vehicle velocity V is within a range of lower velocity including zero (e.g. Not higher than 10km/h), the steering angle AF of the front wheel 12F can be increased rapidly by the first torque tq1 in the in direction because a variety of parameters such as the centrifugal force and the angular momentum of the front wheel 12F are very small. The ranges of lower velocity including V=0 in the graphs of Figs. 8(A), 9(A) (ranges in which thinner plot lines are used on these graphs) represent ranges in which the steering angle AF changes rapidly as described above.

The controller 110 (Fig. 1) controls the vehicle 10 so as to reduce the effect of the total torque tqs. In this embodiment, the controller 110 causes the lean motor 25 of the lean mechanism 89 to generate the lean torque that produces an opposite force to the total torque tqs. As described with regard to Fig. 10(B), the torque that causes the moving direction D12 of the front wheel 12F to be turned occurs depending on the lean angle T. Furthermore, similarly to the torque tq3x in Fig. 12(B), the torque that causes the vehicle body 90 to lean toward the left direction DL side includes a torque component that causes the moving direction D12 of the front wheel 12F to be turned toward the left direction DL side. In this manner, the lean motor 25 can generate the lean torque that causes the vehicle body 90 to lean, thereby exerting on the steering device 41 (and thus the front wheel 12F) a torque that causes the moving direction D12 to be turned about the turning axis Ax1. This allows the controller 110 to control the steering angle AF of the front wheel 12F while keeping the front wheel 12F freely turnable about the turning axis Ax1 of the steering device 41.

It should be noted that the relationship between the direction of the lean torque generated by the lean motor 25 (i.e. the direction of the torque about the rotational axis of the lean motor 25) and the direction of the torque acting on the steering device 41 (and thus front wheel 12F) (i.e. the direction of the torque about the turning axis Ax1) can vary according to the configuration of the vehicle 10 (e.g. the magnitude of the caster angle CA, the magnitude of the trail Lt, etc.) and the driving condition of the vehicle 10.

### A2. Control of Vehicle 10:

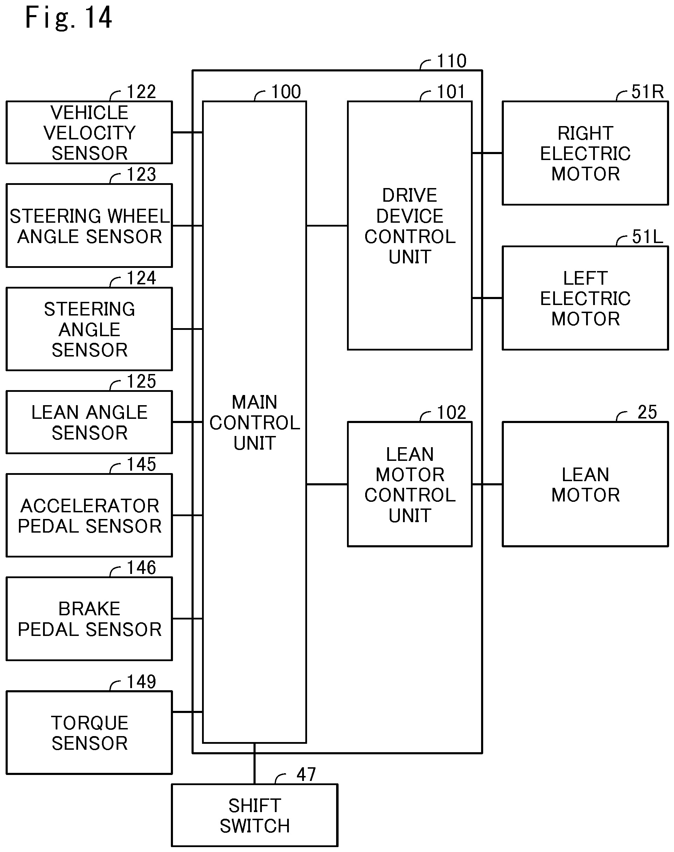

Fig. 14 is a block diagram showing the configuration relating to control of the vehicle 10. The vehicle 10 includes as components for control a vehicle velocity sensor 122, a steering wheel angle sensor 123, a steering angle sensor 124, a lean angle sensor 125, an accelerator pedal sensor 145, a brake pedal sensor 146, a shift switch 47, a torque sensor 149, a controller 110, a right electric motor 51R, a left electric motor 51L, and a lean motor 25.

The vehicle velocity sensor 122 is a sensor for detecting a vehicle velocity of the vehicle 10. In this embodiment, the vehicle velocity sensor 122 is attached on the lower end of the front fork 17 (Fig. 1) to detect a rotational rate of the front wheel 12F, i.e. vehicle velocity.

The steering wheel angle sensor 123 is a sensor for detecting an orientation of the steering wheel 41a (i.e. steering wheel angle). "Steering wheel angle = 0" indicates straight movement, "steering wheel angle > 0" indicates a right turn, and "steering wheel angle < 0" indicates a left turn. The steering wheel angle represents a steering angle AF desired by the user, i.e. a target value of steering angle AF. In this embodiment, the steering wheel angle sensor 123 is attached to the supporting rod 41ax secured to the steering wheel 41a (Fig. 1).

The steering angle sensor 124 is a sensor for detecting a steering angle AF of the front wheel 12F. In this embodiment, the steering angle sensor 124 is attached to the bearing 65 (Fig. 1).

The lean angle sensor 125 is a sensor for detecting a lean angle T. The lean angle sensor 125 is attached to the lean motor 25 (Fig. 4). As discussed above, the orientation of the upper lateral link member 31U relative to the center longitudinal link member 21 corresponds to the lean angle T. The lean angle sensor 125 detects the orientation of the upper lateral link member 31U relative to the center longitudinal link member 21, i.e. the lean angle T.

The accelerator pedal sensor 145 is a sensor for detecting an accelerator operation amount. In this embodiment, the accelerator pedal sensor 145 is attached to the accelerator pedal 45 (Fig. 1). The brake pedal sensor 146 is a sensor for detecting a brake operation amount. In this embodiment, the brake pedal sensor 146 is attached to the brake pedal 46 (Fig. 1).

The torque sensor 149 is a sensor for detecting a torque acting on the front fork 17 of the steering device 41. The front fork 17 includes a portion 17b that extends along the turning axis Ax1. The extending portion 17b is a portion connected to the bearing 65, for example. The torque sensor 149 is attached to this extending portion 17b. The torque sensor 149 is a strain gauge, for example. When a torque (e.g. the total torque tqs in Figs. 8(A), 9(A)) acts on the front wheel 12F with a user holding the steering wheel 41a, the extending portion 17b of the front fork 17 is subject to torsion. The larger the torque is, the larger this torsion. The strain sensor detects the direction and magnitude of the torsion in the extending portion 17b of the front fork 17. Based on the direction and magnitude of the detected torsion, the direction and magnitude of the torque acting on the front fork 17 can be determined. Hereinafter, the torque detected by the torque sensor 149 will be referred to as detected torque.

It should be noted that each sensor 122, 123, 124, 125, 145, 146 is configured using a resolver or encoder, for example.

The controller 110 includes a main control unit 100, a drive device control unit 101, and a lean motor control unit 102. The controller 110 operates with electric power from the battery 120 (Fig. 1). The control units 100, 101, 102 each has a computer. Each computer includes a processor (e.g. CPU), a volatile memory (e.g. DRAM), and a non-volatile memory (e.g. flash memory). The non-volatile memory stores in advance a program for operating the respective control unit. The processor performs a variety of processes by executing the program.

The processor of the main control unit 100 receives signals from the sensors 122, 123, 124, 125, 145, 146, 149 and from the shift switch 47, and then controls the vehicle 10 according to the received signals. Specifically, the processor of the main control unit 100 controls the vehicle 10 by outputting instructions to the drive device control unit 101 and to the lean motor control unit 102 (described in detail later).

The processor of the drive device control unit 101 controls the electric motors 51L, 51R according to the instruction from the main control unit 100. The processor of the lean motor control unit 102 controls the lean motor 25 according to the instruction from the main control unit 100. These control units 101, 102 each have an electric circuit (e.g. inverter circuit) which supplies the electric motors 51L, 51R, 25 to be controlled with electric power from the battery 120.

Hereinafter, a phrase "a processor of a control unit performs a process" is sometimes expressed briefly as a phrase "a control unit performs a process."

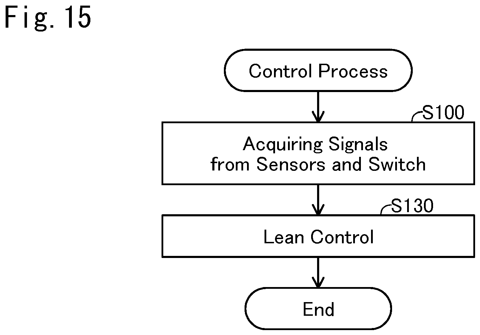

Fig. 15 is a flowchart showing an example control process performed by the controller 110 (Fig. 14). The flowchart of Fig. 15 shows a procedure for controlling the rear wheel support 80. In an embodiment of Fig. 15, the controller 110 controls the lean motor 25 so that the lean angle T approaches a target lean angle mapped to the steering wheel angle. In addition, the controller 110 causes the lean motor 25 to generate the lean torque that produces an opposite torque to the torque detected by the torque sensor 149. In Fig. 15, each process step has a reference number of an alphabet "S" followed by a numeral.

In S100, the main control unit 100 acquires signals from the sensors 122, 123, 124, 125, 145, 146, 149 and from the shift switch 47. This allows the main control unit 100 to identify the velocity V, steering wheel angle, steering angle AF, lean angle T, accelerator operation amount, brake operation amount, detected torque, and driving mode.

In S130, the main control unit 100 identifies a first target lean angle T1 mapped to the steering wheel angle. In this embodiment, the first target lean angle T1 is a value obtained by multiplying the steering wheel angle (in degree) by a predetermined coefficient (e.g. 30/60). It should be noted that instead of the proportional relationship, a variety of relationships such that the larger the absolute value of steering wheel angle is, the larger is the absolute value of first target lean angle T1 may be adopted as a correspondence between the steering wheel angle and the first target lean angle T1. Information which represents the correspondence between the steering wheel angle and the first target lean angle T1 is stored in advance within the non-volatile memory of the main control unit 100. The main control unit 100 references this information to identify the first target lean angle T1 corresponding to the steering wheel angle according to the predetermined correspondence in the referenced information.

It should be noted that as described above, Equation 6 represents the correspondence among the lean angle T, the velocity V, and the turning radius R, and Equation 7 represents the correspondence between the turning radius R and the steering angle AF. These Equations 6 and 7 can be combined to identify the correspondence among the lean angle T, the velocity V, and the steering angle AF. It may be considered that the correspondence between the steering wheel angle and the first target lean angle T1 maps the steering wheel angle to the steering angle AF via the correspondence among the lean angle T, the velocity V, and the steering angle AF (where the steering angle AF can be vary depending upon the velocity V).

The main control unit 100 supplies the lean motor control unit 102 with an instruction for controlling the lean motor 25 so that the lean angle T is equal to the first target lean angle T1. According to the instruction, the lean motor control unit 102 drives the lean motor 25 so that the lean angle T is equal to the first target lean angle T1. This causes the lean angle T of the vehicle 10 to be changed to the first target lean angle T1 mapped to the steering wheel angle.

In this embodiment, the main control unit 100 provides the lean motor control unit 102 with an instruction for causing the lean motor 102 to generate the lean torque that produces an opposite force to the total torque tqs described in Figs. 8-13. According to the instruction, the lean motor control unit 102 drives the lean motor 25. As described above, the relationship between the direction of the lean torque of the lean motor 25 and the direction of the torque acting on the steering device 41 (and thus the front wheel 12F) due to the lean torque varies according to the driving condition of the vehicle. The lean motor control unit 102 controls the direction and magnitude of the lean torque of the lean motor 25 according to the driving condition.

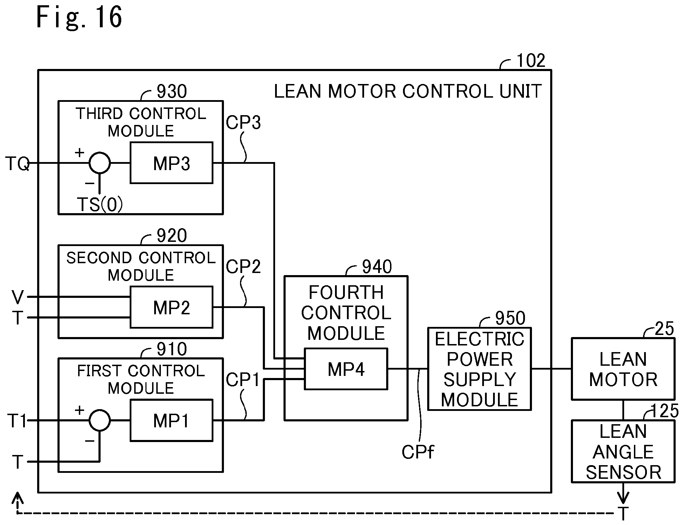

Fig. 16 is a block diagram showing the configuration of the lean motor control unit 102. The lean motor control unit 102 includes a first control module 910, a second control module 920, a third control module 930, a fourth control module 940, and an electric power supply module 950. The four control modules 910-940 are implemented by a computer (not shown) of the lean motor control unit 102. The electric power supply module 950 is an electric circuit for supplying electric power from the battery 12 (Fig. 1) 0 to the lean motor 25.

The first control module 910 acquires from the main control unit 100 information indicating the first target lean angle T1 and the lean angle T measured by the lean angle sensor 125, and uses these parameters T1, T to identify a first control parameter CP1 (hereinafter sometimes referred to as first parameter CP1). The first parameter CP1 is a parameter for controlling the electric power supply module 950 so that the lean angle T is equal to the first target lean angle T1. As the control parameter for controlling the electric power supply module 950, any parameter may be employed that can control the electric power supply module 950 (and thus the lean motor 25) appropriately. For example, the control parameter may be a combination of current and voltage, or instead of this, may be a combination of direction and magnitude of a torque to be generated by the lean motor 25.

The first control module 910 identifies the first parameter CP1 based on a difference calculated by subtracting the lean angle T from the first target lean angle T1. A correspondence between the difference and the first parameter CP1 is predetermined experimentally. The first parameter CP1 is determined so that the lean angle T changes smoothly and the difference becomes zero. The first control module 910 references a first map MP1, which is data representing the predetermined correspondence, to identify the first parameter CP1 mapped to the above difference. The first control module 910 then provides the fourth control module 940 with the identified first parameter CP1. It should be noted that the first map MP1 is stored in advance in a storage device (e.g. non-volatile memory) (not shown) of the lean motor control unit 102.

The second control module 920 acquires from the main control unit 100 information indicating the vehicle velocity V and the lean angle T, and uses these parameters V, T to identify a second control parameter CP2 (sometimes referred to as second parameter CP2). The second parameter CP2 is a parameter for causing the lean motor 25 to generate a lean torque that produces an opposite force to the total torque tqs (e.g. Figs. 8(A), 9(A)), that is, a lean torque that cancels at least some of the total toque tqs.

Figs. 8(B), 9(B) are graphs each showing an example of a relationship between the velocity V and the torque tq. The horizontal axis represents the velocity V, and the vertical axis represents the torque tq about the turning axis Ax1 which acts on the front wheel 12F. Each graph shows a canceling toque tqC1, tqC2. The canceling torques tqC1, tqC2 are produced by the lean torque generated by the lean motor 25. The canceling torque tqC1 in Fig. 8(B) is adjusted to cancel at least some of the total torque tqs in Fig. 8(A). The canceling torque tqC2 in Fig. 9(B) is adjusted to cancel at least some of the total torque tqs in Fig. 9(A). In order to cancel the total torque tqs so that there is no residual torque, the canceling torques tqC1, tqC2 are the same as torques obtained by inverting the directions of the corresponding total torques tqs.

As described above, the total torque tqs varies according to the driving condition of the vehicle 10. And, the driving condition of the vehicle 10 varies without being limited to the condition in which the turning radius R or the lean angle T is constant as in Fig. 8(A), 9(A). The correspondence between such a variety of driving conditions and desired canceling torques (and thus lean toques of the lean motor 25 for generating the desired canceling torques) is predetermined experimentally. For example, the correspondence between driving conditions and desired canceling toques (and thus desired lean torques) can be determined by observing a behavior of the front wheel 12F (e.g. change in the steering angle AF) and analyzing a torque detected by the torque sensor 149 under a variety of driving conditions.

In this embodiment, a correspondence between a combination of vehicle velocity V and lean angle T and the second parameter CP2 representing the direction and magnitude of the desired lean torque is predetermined experimentally. And, the second control module 920 references a second map MP2, which is data representing the determined correspondence, to identify the second parameter CP2 mapped to the combination of vehicle velocity V and lean angle T. The second control module 920 then provides the fourth control module 940 with the identified second parameter CP2. It should be noted that the second map MP2 is stored in advance in a storage device (e.g. non-volatile memory) (not shown) of the lean motor control unit 102.

The third control module 930 (Fig. 16) acquires from the main control unit 100 information indicating a detected torque TQ detected by the torque sensor 149, and uses the detected torque TQ to identify a third control parameter CP3 (hereinafter sometimes referred to as third parameter CP3). The third parameter CP3 is a parameter for controlling the electric power supply module 950 so that the detected torque TQ is equal to zero. The third control module 930 identifies the third parameter CP3 based on a difference calculated by subtracting a reference torque TS (zero in this example) from the detected torque TQ. A correspondence between the difference and the third parameter CP3 is predetermined experimentally. The lean torque to be mapped to the third parameter CP3 is opposite in direction to the detected torque TQ, and the third parameter CP3 is determined so that the detected torque TQ changes smoothly and the difference becomes zero.

The third control module 930 references a third map MP3, which is data representing the predetermined correspondence, to identify the third parameter CP3 mapped to the above difference. The third control module 930 then provides the fourth control module 940 with the identified third parameter CP3. It should be noted that the third map MP3 is stored in advance in a storage device (e.g. non-volatile memory) (not shown) of the lean motor control unit 102.

The fourth control module 940 (Fig. 16) uses the first parameter CP1 from the first control module 910, the second parameter CP2 from the second control module 920, and the third parameter CP3 from the third control module 930 to identify a control parameter CPf for controlling the electric power supply module 950. A correspondence between a combination of control parameters CP1, CP2, CP3 and the final control parameter CPf is predetermined experimentally. For example, the control parameter CPf is determined so that the lean torque to be mapped to the control parameter CPf is a sum of the lean torque to be mapped to the first parameter CP1, the lean torque to be mapped to the second parameter CP2, and the lean torque to be mapped to the third parameter CP3. The fourth control module 940 references a fourth map MP4, which is data representing the correspondence between the control parameters CP1, CP2, CP3 and the control parameter CPf to identify the control parameter CPf. The fourth control module 940 then controls the electric power supply module 950 according to the identified control parameter CPf. The electric power supply module 950 supplies the lean motor 25 with the power mapped to the control parameter CPf. This causes the lean motor 25 to generate the lean torque obtained by taking into comprehensive consideration into the first parameter CP1, the second parameter CP2, and the third parameter CP3.

When the lean angle T is equal to the first target lean angle T1, the lean torque corresponding to the first parameter CP1 is approximately equal to zero. In this case, the lean motor 25 generates a lean torque that is a sum of the lean torque corresponding to the second parameter CP2 (i.e. lean torque for generating the canceling torque) and the lean torque corresponding to the third parameter CP3. For example, the lean motor 25 generates the lean torque so as to generate the canceling torque tqC1, the canceling torque tqC2 shown in Fig. 8(B), Fig. 9(B) under the driving condition described with regard to Fig. 8(A), Fig. 9(A).

In addition, when the torque acting on the front wheel 12F changes due to a disturbance such as vibration cause by running on a bumpy road, the torque sensor 149 can detect a variation in torque prior to the lean angle T changing. The lean motor 25 then generates the lean torque corresponding to the third parameter CP3 from the third control module 930 to exert on the front wheel 12F the canceling torque which cancels at least some of the detected torque. This allows the torque acting on the front wheel 12F to be reduced prior to the lean angle T changing significantly.

Residual torques tqR1, tqR2 in Figs. 8(B), 9(B) represent examples of sum of a torque equivalent to the total torque tqs actually acting on the front wheel 12F (and thus steering device 41) and the canceling torque tqC1, tqC2. As shown, the magnitudes of the residual torques tqR1, tqR2 are smaller than the magnitudes of the total torques tqs in Figs. 8(A), 9(A), regardless of the vehicle velocity V. In addition, the residual torques tqR1, tqR2 are approximately equal to zero, regardless of the vehicle velocity V. In this manner, by canceling at least some of the torque actually acting on the front wheel 12F (and thus steering device 41) with the canceling torque tqC1, tqC2, the residual torque tqR1, tqR2 can be reduced that finally acts on the front wheel 12F. As a result, it is possible to suppress unintended change in the steering angle AF (and thus unintended change in the lean angle T).

It should be noted that the second parameter CP2 identified by using the second map MP2 can have an error. That is, the canceling torque generated by the lean torque mapped to the second parameter CP2 can be different from the torque (equivalent to the total torque tqs) actually acting on the front wheel 12F. As a result, the residual torque larger than zero can act on the front wheel 12F (and thus the steering device 41). The larger residual torque can deteriorate the driving stability of the vehicle 10. In this embodiment, according to the third parameter CP3 from the third control module 930, the lean motor 25 generates the lean torque so that the residual torque (i.e. detected torque) becomes equal to zero. Therefore, it is possible to suppress an increase in the residual torque. Furthermore, in this embodiment, the canceling torque (i.e. second parameter CP2) is determined so that the residual torque does not exceed a maximum allowable torque tqth.

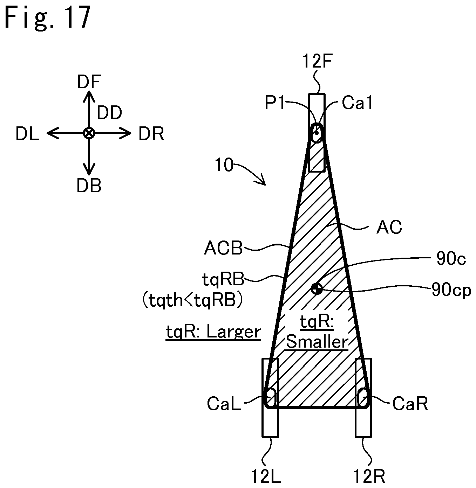

The maximum allowable torque tqth is determined as follows, for example. Fig. 17 shows positions of the wheels 12F, 12L, 12R and a position of the gravity center 90c of the vehicle body 90 viewed in the vertically downward direction DD. In this example, the vehicle 10 is assumed to be running on a horizontal and flat ground. A projected position 90cp as shown represents a projected position on the ground when the gravity center 90c is projected toward the vertically downward direction DD onto the ground. A hatched area AC is an area represented by a convex hull comprised of respective contact areas Ca1, CaR, CaL of the three wheels 12F, 12L, 12R (hereinafter referred to as convex hull area AC). As shown, the projected position 90cp is located within the convex hull area AC.

The projected position 90cp moves according to a change in the lean angle T of the vehicle body 90 etc. When the projected position 90cp is located within the convex hull area AC, the vehicle 10 can run stably. When the projected position 90cp is located outside of the convex hull area AC, the driving stability can be deteriorated. For example, one of the rear wheels 12L, 12R can leave the ground.

As described above, the residual torque can change the lean angle T. When an excessively large residual torque acts on the front wheel 12F (and thus steering device 41), the lean angle T change significantly, which can cause the projected position 90cp to move out of the convex hull area AC. The maximum allowable torque tqth is preset to a value smaller than the residual torque that can move the projected position 90cp out of the convex hull area AC.

Fig. 17 shows a contour ACB of the convex hull area AC by a thick line. A boundary torque tqRB represents a residual torque necessary to move the projected position 90cp onto the contour ACB. The boundary torque tqRB can vary according to position on the contour ACB. In addition, even for the same position on the contour ACB, the boundary torque tqRB can vary according to the driving condition of the vehicle 10. If the residual torque tqR is equal to or larger than the boundary torque tqRB, the projected position 90cp can move out of the convex hull area AC. A value smaller than the minimum value of this boundary torque tqRB is adopted as the maximum allowable torque tqth. The second parameter CP2 is determined so that the residual torque tqR does not exceed the maximum allowable torque tqth. Such a second parameter CP2 may be considered to be determined so that the projected position 90cp is located within the convex hull area AC.

In the same manner, the third parameter CP3 is also determined so that the residual torque tqR does not exceed the maximum allowable torque tqth. Such a third parameter CP3 may be considered to be determined so that the projected position 90cp is located within the convex hull area AC.

The lean motor control unit 102 (Fig. 16) repeatedly performs the process described above. The first control module 910 identifies the first parameter CP1 so that the lean angle T changed by driving the lean motor 25 further approaches the first target lean angle T1, and then provides the fourth control module 940 with the identified first parameter CP1. In this manner, the first control module 910 feedback-controls the lean torque to be generated by the lean motor 25 so that the lean angle T approaches the first target lean angle T1. This causes the lean angle T to be adjusted to the first target lean angle T1. In addition, the second control module 920 provides the fourth control module 940 with the second parameter CP2 mapped to the vehicle velocity V and lean angle T. In this manner, the second control module 920 feedforward-controls the lean torque to be generated by the lean motor 25. As such, any excessive torque is prevented from acting on the front wheel 12F (and thus the steering device 41). And, the residual torque, i.e. detected torque, is suppressed. In addition, the third control module 930 identifies the third parameter CP3 so that the detected toque TQ approaches zero, and then provides the fourth control module 940 with the identified third parameter CP3. In this manner, the third control module 930 feedback-controls the lean torque to be generated by the lean motor 25 so that the detected torque TQ approaches zero. As such, the residual torque, i.e. detected torque, is suppressed.

For example, when the lean angle T is equal to the first target lean angle T1, the lean torque mapped to the first parameter CP1 can be equal to zero. At this time, the lean torque mapped to the second parameter CP2 can be larger than zero in order to cancel at least some of the torque acting on the front wheel 12F (e.g. torque tqs (Figs. 8(A), 9(A)). In this case, the lean motor 25 generates the lean torque mapped to the second parameter CP2. This prevents the direction D12 of the front wheel 12F from becoming unstable while keeping the lean angle T at the first target lean angle T1. In addition, when the lean torque mapped to the second parameter CP2 fails to sufficiently suppress the residual torque (i.e. detected torque), the lean motor 25 generates the lean torque mapped to the third parameter CP3 identified according to the detected torque. This causes the detected torque to be reduced (e.g. the detected torque is kept at a torque smaller than the maximum allowable torque tqth).

Then, the process of Fig. 15 ends. The controller 110 repeatedly performs the process of Fig. 15.

It should be noted that in this embodiment, the user can adjust the steering angle AF by handling the steering wheel 41a coupled to the front fork 17. Therefore, the actual steering angle AF, turning radius R, and vehicle velocity V can differ from values included in the correspondence relationship expressed in Equations 6, 7.

The main control unit 100 (Fig. 14) and the drive device control unit 101 serve as a drive control unit for controlling the electric motors 51L, 51R according to the accelerator operation amount and brake operation amount although not illustrated. In this embodiment, specifically, the main control unit 100 supplies the drive device control unit 101 with an instruction for increasing output power of the electric motors 51L, 51R when the accelerator operation amount is increased. According to the instruction, the drive device control unit 101 controls the electric motors 51L, 51R so as to increase their output power. The main control unit 100 supplies the drive device control unit 101 with an instruction for decreasing output power of the electric motors 51L, 51R when the accelerator operation amount is decreased. According to the instruction, the drive device control unit 101 controls the electric motors 51L, 51R so as to decrease their output power.

The main control unit 100 supplies the drive device control unit 101 with an instruction for decreasing output power of the electric motors 51L, 51R when the brake operation amount becomes larger than zero. According to the instruction, the drive device control unit 101 controls the electric motors 51L, 51R so as to decrease their output power. It should be noted that the vehicle 10 preferably has a brake device which frictionally reduces rotational rate of at least one of all the wheels 12F, 12L, 12R. In addition, the brake device preferably reduces the rotational rate of the at least one wheel when the user steps on the brake pedal 46.

As described above, in this embodiment, the vehicle 10 (Figs. 1-5) includes three wheels, including a pair of rear wheels 12L, 12R spaced apart from each other in the width direction of the vehicle 10, and a front wheel 12F, which is a steered wheel turnable to right and left relative to the vehicle body 90. The vehicle 10 further includes: a steering wheel 41a, which is an example of operation input unit to be operated to input a steering direction of the steered wheel 12F; a lean mechanism 89 for leaning the vehicle body 90 in its width direction; and a controller 110 for controlling the lean mechanism 89. The controller 110 (in particular, the main control unit 100 and the first control module 910 (Fig. 16)) controls the lean mechanism 89 so that the vehicle body 90 leans to the steering direction side in response to an input to the steering wheel 41a. The vehicle 10 also includes a torque sensor 149 for detecting a force which changes the lean angle T of the vehicle body 90. And, the controller 110 (in particular, the main control unit 100 and the control modules 920, 930 (Fig. 16)) causes the lean mechanism 89 to generate a lean torque that produces a canceling torque in a direction opposite to a detected torque detected by the torque sensor 149. Accordingly, the detected torque can be reduced. This can result in improved stability of the steering angle AF of the front wheel 12F, and thus improved driving stability of the vehicle 10.

Assume that the vehicle 10 turns at a constant turning radius R. In this case, the controller 110 (in particular, the main control unit and the second control module 920 (Fig. 16)) causes the lean mechanism 89 to continually generate the lean torque larger than zero in order to generate the canceling torque tqC1 larger than zero in a direction opposite to the detected torque in the range of vehicle velocity V excluding the zero velocity Vv1 (sometimes referred to as first nonzero range VR1) as shown in Fig. 8(B). This continually suppresses the residual torque (i.e. the detected torque) acting on the front wheel 12F, which can result in improved stability of the steering angle AF during turning, and thus improved driving stability of the vehicle 10.

Assume that the vehicle 10 turns at a constant lean angle T. In this case, the controller 110 (in particular, the main control unit and the second control module 920 (Fig. 16)) causes the lean mechanism 89 to continually generate the lean torque larger than zero in order to generate the canceling torque tqC2 larger than zero in a direction opposite to the detected torque in the range of vehicle velocity V excluding the zero velocity Vv2 (sometimes referred to as second nonzero range VR2) as shown in Fig. 9(B). This continually suppresses the residual torque (i.e. the detected torque) acting on the front wheel 12F, which can result in improved stability of the steering angle AF during turning, and thus improved driving stability of the vehicle 10.

In addition, as described with reference to Figs. 8(B), 9(B), 17, the controller 110 (in particular, the main control unit 100 and the control modules 920, 930 (Fig. 16)) causes the lean mechanism 89 to generate the lean torque so that the detected torque to be detected by the torque sensor 149 does not exceed the predetermined maximum allowable torque tqth. Accordingly, the detected torque is suppressed not to exceed the maximum allowable torque tqth, which can improve the driving judgment.

In addition, as described with reference to Fig. 17, the maximum allowable toque tqth is predetermined so that if the detected torque detected by the torque sensor 149 is the same as the maximum allowable torque tqth, the projected position 90cp on the horizontal ground when the gravity center 90c of the vehicle body 90 is projected toward the vertically downward direction DD onto the ground is located within the convex hull area AC on the ground which is comprised of three contact areas CaL, CaR, Ca1 of the three wheels 12L, 12R, 12F. In this manner, the detected torque is suppressed so that the projected position 90cp is located within the convex hull area AC, which can improve the driving judgment.

In addition, the controller 110 (in particular, the main control unit and the second control module 920 (Fig. 16)) uses a plurality of parameters, including the lean angle T of the vehicle body 90 and the vehicle velocity V, to feedforward-control the lean torque to be generated by lean mechanism 89. And, the controller 110 (in particular, the main control unit 100 and the third control module 930 (Fig. 16)) uses the detected torque detected by the torque sensor 149 to feedback-control the torque to be generated by the lean mechanism 89. As such, an excessive residual torque is prevented from acting on the front wheel 12F (and thus the steering device 41). This can result in improved stability of the steering angle AF, and thus improved driving stability of the vehicle 10.

The steering device 41 also includes the front fork 17 which supports the front wheel 12F. The front fork 17 includes a portion 17b that extends along the turning axis Ax1 (e.g. a portion connected to the steering motor 65). And, the front wheel 12F (Fig. 1), and the front fork 17 of the steering device 41 are configured so that the intersection point P2 between the turning axis Ax1 due to the steering device 41 and the ground GL is located on the front direction DF side of the center location P1 of the contact area Ca1 between the front wheel 12F and the ground GL. The torque sensor 149 detects a torque acting on the extending portion 17b of the front fork 17 as a torque which changes the lean angle T of the vehicle body 90. Specifically, the torque sensor 149 is attached to the extending portion 17b. According to this configuration, because the trail Lt of the front wheel 12F is not equal to zero, the torque acting on the front wheel 12F causes a torque to act on the steering device 41 (e.g. front fork 17). This torque can change the lean angle T of the vehicle body 90. The torque sensor 149 can appropriately detect the force which changes the lean angle T of the vehicle body 90 by detecting the torque acting on the steering device 41 (e.g. the front fork 17).

### B. Modifications:

(1) The attachment position of the detector (e.g. the torque sensor 149 (Fig, 1)) for detecting a force that changes the lean angle T is not limited to the extending portion 17b of the front fork 17, but may be any portion of the vehicle 10 that can deform or move in response to the force that changes the lean angle T. For example, the torque sensor 149 may be attached to a support for supporting the rear wheel (e.g. longitudinal link member 33L, 33R in Fig. 4).
   In addition, a variety of forces may be employed as the force to be detected by the detector that changes the lean angle T of the vehicle body 90. For example, the torque sensor 149 attached to the extending portion 17b of the front fork 17 may detect a torque about an axis (e.g. an axis extending toward the front direction DF side) that intersects with the turning axis Ax1. Such a torque can be identified by detecting torsion of the front fork 17.
   A load sensor may also be located between the central part of the front wheel 12F and the front fork 17 to detect a force with which it is pressed between the front wheel 12F and the front fork 17 (a force in a parallel direction with the rotational axis of the front wheel 12F, in this case). If such a force differs between the right side and left side of the front wheel 12F, the force that changes the lean angle T acts on the front wheel 12F.
   A load sensor may also be located between the central part of the front wheel 12F and the front fork 17 to detect a force in the vertically upward direction that the front fork 17 receives from the front wheel 12F. If such a force differs between the right side and left side of the front wheel 12F, the force that changes the lean angle T acts on the front wheel 12F.
   A strain sensor may be secured on the side of inner periphery of the tire of the front wheel 12F to detect a force that acts on the tire (a force in a parallel direction with the rotational axis of the front wheel 12F, in this case). The force that deforms the tire laterally in this manner can change the lean angle T.
   Any of these forces can change the lean angle T, regardless of the magnitude of the trail Lt and the magnitude of the caster angle CA. As in these modifications and the above embodiments, the front wheel 12F (in more general terms, the steered wheel) can be subject to a variety of forces that can change the steering angle (and thus the lean angle T of the vehicle body 90). And, it is not easy to adjust the caster angle CA and the trail Lt and thereby reduce such forces. In the above-described embodiment, by causing the lean mechanism 89 to generate the lean torque, the canceling torque is generated, thereby reducing the residual torque. This can result in improved stability of the steering angle, and thus improved driving stability of the vehicle 10. In this manner, the method of using the canceling torque to reduce the residual torque can be applied to vehicles with a variety of configurations (e.g. a variety of vehicles with a variety of caster angles CA and a variety of trails Lt).
(2) As the process of generating the canceling torque, a variety of other processes may be employed instead of the processes described above with reference to Figs. 14-16 etc. For example, the range of vehicle velocity V within which the process of causing the canceling torque to continually act on the front wheel 12F is performed may be a particular range that is all or some of a range obtained by excluding a zero velocity at which the torque (e.g. a torque corresponding to the total torque tqs in Figs. 8(A), 9(A)) acting on the front wheel 12F (and thus the steering device 41) can be equal to zero from the range of not higher than the maximum velocity of the vehicle 10. For example, in the first nonzero range VR1 of Fig. 8(B), application of the canceling torque may be omitted within a range of not higher than a predetermined threshold Vth1 higher than zero, and the canceling torque may be applied within a range of not lower than the threshold Vth1. Similarly, in the second nonzero range VR2 of Fig. 9(B), application of the canceling torque may be omitted within a range of not higher than a predetermined threshold Vth2 higher than zero, and the canceling torque may be applied within a range of not lower than the threshold Vth2.
   Among the elements of the lean motor control unit 102 (Fig. 16), at least one of the second control module 920 which performs the feedforward control or the third control module 930 which performs the feedback control may be omitted. In any event, the first control module 910 can cause the lean motor 25 to continually generate the lean torque for generating the canceling torque to maintain the lean angle T at the target lean angle through the feedback control while the lean angle T is at the target lean angle. In this case, the main control unit 100 and the first control module 910 as a whole control the lean mechanism 89 so that the vehicle body 90 leans to the turning direction, and also cause the lean mechanism 89 to generate the lean torque that produces a torque in a direction opposite to the detected torque detected by the torque sensor 149. This suppresses the detected torque (the torque actually acting on the front wheel 12F), which can improve the driving stability. It should be noted that the controller 110 preferably feedforward-controls the lean torque in order to suppress in advance an increase in the torque acting on the front wheel 12F. For the feedforward control of the lean torque, in addition to the vehicle velocity V and the lean angle T, another parameter (e.g. steering angle AF etc.) may be used.
   In any event, the driving condition of the vehicle 10 varies from moment to moment. This causes the appropriate canceling torque to also change from moment to moment. Therefore, the controller of the vehicle 10 (e.g. the controller 110 in Fig. 14) preferably uses the parameters representing the driving condition (e.g. a plurality of parameters including the vehicle velocity V, lean angle T, and detected torque TQ) to control the controlled elements (such as the lean motor 25 and electric motors 51R, 51L) from moment to moment to allow for the generation of appropriate canceling torque that changes from moment to moment. A variety of configurations may be employed as a configuration of the controller for performing such a control. For example, the controller may reference data (e.g. map) representing a correspondence between the parameters representing the driving condition and the parameters for controlling the controlled element (e.g. the lean mechanism) to control the controlled elements. Alternatively, the controller may use a mathematical function that outputs a parameter for controlling the controlled element in response to an input of the parameter representing the driving condition to control the controlled element. Such a mathematical function may be achieved through a computation by using a computer, or may be achieved by an analog circuit.
(3) As the configuration of lean mechanism which leans the vehicle body 90 in its width direction, a variety of other configurations may be employed instead of the configuration including the link mechanism 30 (Fig. 4). For example, as the lean mechanism, a configuration may be employed that includes a hinge that connects rotatably in the width direction a base for rotatably supporting the rear wheels 12L, 12R with the vehicle body 90, and an electric motor for controlling a lean angle (i.e. the lean angle T) of the vehicle body 90 relative to the base. In addition, the drive device of the lean mechanism may be another type of drive device instead of the electric motor. For example, the drive device of the lean mechanism may include a pump, and the lean mechanism may be driven by fluid pressure (e.g. oil pressure) from the pump. In general, it is possible to employ a variety of configurations which can tilt the vehicle body 90 relative to the ground GL. It is preferable to employ a mechanism which can maintain the lean angle T of the vehicle body 90 at a target lean angle, in contrast to a simple suspension.
(4) As the method of controlling the vehicle, a variety of other methods may be employed instead of the method described above with reference to Fig. 15. For example, the controller 110 (specifically, the main control unit 100) may adjust the target lean angle of the lean angle T according to the vehicle velocity V. For example, the main control unit 100 may employ the first target lean angle T1 when the vehicle velocity V is equal to or larger than a predetermined threshold, and employ the second target lean angle T2 having an absolute value smaller than that of the first target lean angle T1 when the vehicle velocity V is smaller than the threshold. During lower velocity, the traveling direction is changed more frequently than during higher velocity. Therefore, during lower velocity, by making the absolute value of the lean angle T smaller, it is possible to drive more stably even if changing the traveling direction frequently.
(5) As the configuration of vehicle, a variety of other configurations may be employed instead of the above-described configurations. For example, the computer such as the controller 110 (Fig. 14) may be omitted. For example, an electric circuit including no computer may control the motors 51R, 51L, 25 in response to signals from the sensors 122, 123, 124, 125, 145, 146, 149 and the switch 47. Alternatively, a machine which operates using a drive force of hydraulic pressure or motor may control the motors 51R, 51L, 25 instead of the electric circuit. In addition, a variety of configurations may be employed as the total number and arrangement of the plurality of wheels. For example, there may be two front wheels in total and one rear wheel in total. Alternatively, there may be two front wheels in total and two rear wheels in total. Furthermore, a pair of wheels spaced apart from each other in the width direction may be front wheels, or may be steered wheels. The rear wheels may be steered wheels. In any event, the vehicle preferably includes N wheels (N is an integer equal to or larger than 3) including a pair of wheels spaced apart from each other in the width direction of the vehicle and a steered wheel(s), the N wheels including one or more front wheel and one or more rear wheel located on the back direction DB side of the front wheel. This configuration enables the vehicle to self-stand when it is stopped. The drive device for driving the drive wheel may be any device (e.g. internal combustion engine) which rotates the wheel instead of the electric motor. Alternatively, the drive device may be omitted. That is, the vehicle may be a human-powered vehicle. In addition, the maximum riding capacity of the vehicle may be two or more persons instead of one person.
(6) In each embodiment described above, some of the components which are achieved by hardware may be substituted with software while some or all of the components which are achieved by software may be substituted with hardware. For example, the function of the controller 110 of the vehicle 10 in Fig. 14 may be achieved by a dedicated hardware circuitry.

In addition, if some or all of the functions of the present invention are achieved by a computer program, the program can be provided in the form of a computer-readable storage medium (e.g. non-transitory storage medium) having the program stored therein. The program can be used while being stored in a storage medium (computer-readable storage medium) which is the same as or different from the provided storage medium. The "computer-readable storage medium" is not limited to a portable storage medium such as memory card or CD-ROM, but may also include an internal storage within the computer such as various types of ROM, and an external storage connected to the computer such as hard disk drive.

The present invention has been described above with reference to the embodiments and the modifications although the above-described embodiments are intended to facilitate the understanding of the invention, but not to limit the invention. The present invention may be modified or improved without departing from the spirit and scope of the claims, and includes its equivalents.

### Industrial Applicability

The present invention can be preferably used for a vehicle.

### Description of the References

- 10: vehicle
- 11: seat
- 12: battery
- 12F: front wheel
- 12L: left rear wheel (drive wheel)
- 12R: right rear wheel (drive wheel)
- 12Fc: center
- 12La, 12Ra: wheel
- 12Lb, 12Rb: tire
- 17: front fork
- 20: main body
- 20a: front portion
- 20b: bottom portion
- 20c: rear portion
- 20d: support portion
- 21: center longitudinal link member
- 25: lean motor
- 30: link mechanism
- 31D: lower lateral link member
- 31U: upper lateral link member
- 33L: left longitudinal link member
- 33R: right longitudinal link member
- 41: steering device
- 41a: steering wheel
- 41ax: supporting rod
- 45: accelerator pedal
- 46: brake pedal
- 47: shift switch
- 51L: left electric motor
- 51R: right electric motor
- 65: bearing
- 70: suspension system
- 70L: left suspension
- 70R: right suspension
- 70La: central axis
- 75: connector
- 80: rear wheel support
- 82: first support portion
- 83: second support portion
- 89: lean mechanism
- 90: vehicle body
- 90c: gravity center
- 90cp: projected position
- 100: main control unit
- 101, 101a: drive device control unit
- 102: lean motor control unit
- 110: controller
- 120: battery
- 122: vehicle velocity sensor
- 123: steering wheel angle sensor
- 124: steering angle sensor
- 125: lean angle sensor
- 145: accelerator pedal sensor
- 146: brake pedal sensor
- 810: drive force control unit
- 820L: left electric power supply module
- 820R: right electric power supply module
- 910: first control module
- 920: second control module
- 930: third control module
- 940: fourth control module
- 950: electric power supply module
- T: lean angle
- V: velocity
- R: turning radius
- m: mass
- V: vehicle velocity
- P1: contact center (center location)
- P2: intersection point
- CA: caster angle
- DVU: vehicle upward direction
- DU: vertically upward direction
- DD: vertically downward direction
- DL: left direction
- DR: right direction
- DF: front direction
- DB: back direction
- AC: convex hull area
- GL: ground
- Cb: rear center
- Cf: front center
- Lh: wheelbase
- Cr: turning center
- Lt: trail
- Ax1: turning axis

## Claims

1. A vehicle comprising:
a vehicle body;
N (N is an integer equal to or larger than 3) wheels including a pair of wheels spaced apart from each other in a width direction of the vehicle and a steered wheel turnable to right and left relative to the vehicle body;
an operation input unit to be operated to input a steering direction of the steered wheel;
a lean mechanism for leaning the vehicle body in the width direction; and
a lean control unit for controlling the lean mechanism,
wherein the lean control unit controls the lean mechanism so that the vehicle body leans toward the steering direction side in response to an input into the operation input unit, and
the vehicle comprises a detector for detecting a force that changes a lean angle of the vehicle body, and
the lean control unit causes the lean mechanism to generate a torque that produces a force in a direction opposite to a force detected by the detector.

2. The vehicle of claim 1,
wherein the lean control unit causes the lean mechanism to continually generate a torque larger than zero that produces the force in the opposite direction when the vehicle turns at a velocity within a particular first range and at a constant turning radius.

3. The vehicle of claim 1 or 2,
wherein the lean control unit causes the lean mechanism to continually generate a torque larger than zero that produces the force in the opposite direction when the vehicle turns at a velocity within a particular second range with the lean angle of the vehicle body constant.

4. The vehicle of any one of claims 1 to 3,
wherein the lean control unit causes the lean mechanism to generate a torque so that the force to be detected by the detector does not exceed a predetermined maximum allowable force.

5. The vehicle of claim 4,
wherein the maximum allowable toque is predetermined so that if the force detected by the detector is the same as the maximum allowable force, a projected position on a horizontal ground when a gravity center of the vehicle body is projected toward a vertically downward direction onto the ground is located within a convex hull area on the ground which is comprised of N contact areas of the N wheels.

6. The vehicle of any one of claims 1 to 5,
wherein the lean control unit uses a plurality of parameters, including the lean angle of the vehicle body and a vehicle velocity, to feedforward-control a torque to be generated by the lean mechanism, and uses a force detected by the detector to feedback-control a torque to be generated by the lean mechanism.

7. The vehicle of any one of claims 1 to 6, comprising:
a supporting member including a portion extending along a support axis that is a particular axis, and supporting a particular wheel of the N wheels,
wherein the particular wheel and the supporting member are configured so that an intersection point between the support axis and a ground is located in front of a center location of a contact area between the particular wheel and the ground, and
the detector detects a torque acting on the extending portion of the supporting member as the force that changes the lean angle of the vehicle body.
